# EUROPEAN PATENT SPECIFICATION

(11) **EP 3 414 398 B1**
(45) Date of publication and mention of the grant of the patent: **22.12.2021**
(21) Application number: 17749926.6
(22) Date of filing: 10.02.2017
(51) Int. Cl.: E01H 12/00, E02B 15/10, E01H 1/00, A46B 5/02, A46B 7/06, A46B 17/06, B08B 1/00, A46B 5/00, A46B 9/02

(54) **SYSTEM AND METHOD FOR MANUALLY CLEANING AN ENVIRONMENT OF A SUBSTANCE WITH AN OIL CONTENT AND HAND TOOLS AND THEIR CLEANING TOOLS FOR THE SYSTEM**
SYSTEM UND VERFAHREN ZUR MANUELLEN REINIGUNG EINER UMGEBUNG VON EINER SUBSTANZ MIT EINEM ÖLGEHALT SOWIE HANDWERKZEUGE UND DEREN REINIGUNGSWERKZEUGE FÜR DAS SYSTEM
SYSTÈME ET PROCÉDÉ POUR NETTOYER MANUELLEMENT UN ENVIRONNEMENT D'UNE SUBSTANCE AYANT UNE TENEUR EN HUILE, OUTILS MANUELS ET LEURS OUTILS DE NETTOYAGE POUR LE SYSTÈME

(30) Priority: 10.02.2016 FI 20165100; 22.07.2016 FI 20165597
(43) Date of publication of application: 19.12.2018
(73) Proprietor: Sajakorpi OY, 33101 Tampere (FI)
(72) Inventor: SAJAKORPI, Kimmo, 33101 Tampere (FI); HIRSIVUORI, Timo, 33900 Tampere (FI)
(74) Representative: Kespat Oy
(86) International application number: PCT/FI2017/050077
(87) International publication number: WO 2017/137667

(56) References cited:
- WO-A1-87/02401
- US-A- 3 170 182
- US-A1- 2005 028 308
- US-A1- 2005 160 544
- US-A1- 2015 306 740
- Anonymous: "ULKOHARJA YLEISKÄYTTÖÖN", Sinituote Oy, 1 February 2016 (2016-02-01), XP009513766, Retrieved from the Internet: URL:http://www.sinituote.fi/ulkoharja-ylei skayttoon [retrieved on 2017-05-09]

## Description

The invention relates to a system for manually cleaning an environment of a substance with an oil content, which includes
- one or several hand tools, which include
   - a handle part,
   - a brush element, attached to the handle part, to which bristles are fitted,
- one or several cleaning tools, which include one or several scrapers equipped with scraper elements, for cleaning the hand tool's brush element of the substance with an oil content,
   and in at least one hand tool belonging to the system,
   - at least some of bristles are arranged to form bristle bunches arranged in the brush element in two or more lines,
   - in the brush element at least some of the lines of the bristle bunches are at a distance from each other,
   and in which system the scraper elements of the scraper of at least one cleaning tool and the lines of bristle bunches of the brush element of the hand tool belonging to the system are arranged relative to each other for scraping the substance with an oil content from between the lines of bristle bunches by means of the scraper elements. In addition, the invention also relates to a method for manually cleaning an environment of a substance with an oil content.

Serious oil accidents, such as, for example, oil tanker groundings, must be laboriously and extensively cleaned. When the oil reaches the shore, it must generally be collected manually from the ground. Shores are often very stony. For its part, this hinders the collection of oil from them.

The use is known of various tools sold as garden and planting trowels, and of bricklayer's trowels and children's toy spades is known to collect oil manually from shores. By means of these, oil can be collected at least in the initial stages of cleaning, when the oil lies in large lumps on the shore. The use of dishbrushes is also known for this purpose. However, as an operation oil collection differs greatly from washing dishes, which is the purpose of a dish-brush. Oil collection particularly loads the dish-brush's brush part, because in that it is necessary to use greater force than when washing dishes. The dish-brush then loses its cleaning property and oil-collection capacity relatively quickly. They must therefore be changed frequently when carrying out cleaning (at intervals of even half-an-hour).

Using tools, oil is collected, for example, from the shoreline, the ground, from between stones and from the surface of stones, in a receptacle, for example, a pail. An oily substance is sticky and, in addition, it is mixed with gravel and mineral substances. Thus it is difficult to detach from a tool. The collected oily substance is then tipped from the receptacle into, for example, a larger sack. The waste is transported away from the shore in the sack. The sticky oily substance also detaches poorly from the receptacle. It must then be scraped to detach it from the receptacle. The oily substance that has not detached from the receptacle makes the collection of oil inefficient and unmeaningful.

The usability of the aforementioned numerous various tools for oil collection leaves much to be desired. Being designed for completely other purposes, they are poorly suited for oil collection, in terms of functionality, ergonomics, and usability. Some particular problems relating to oil collection are the variety of landforms (stones, rocks, and holes in them, jetty structures), the cleaning of the tool when collecting (transferring oil to the receptacle), and scraping the oil collected in the receptacle using the tool into the sack. The problems either singly or together make the cleaning of the environment difficult and slow. This makes cleaning work unmeaningful, especially for the people performing the cleaning. International patent application publication number WO 8702401 A1 discloses a hand tool for cleaning oil from shores. In the tool is a handle, to which a cylindrical brush part is attached. The outer circumference of the brush part is completely covered in bristles arranged to form bristle bunches in one or more lines. The oil-collection effect of the tool is based on the oil adhering to the bristles belonging to the brush part. In addition, the document also discloses a scraper equipped with scraper elements, for cleaning the hand tool's brush element of the substance with an oil content.

In addition, patent application publication number US 2015/0306740 A1 discloses a deburring brush as a surface treatment device. In its Figure 1 has been disclosed bristle part having bristles in bunches having different length.

The present invention is intended to create a system for manually cleaning an environment of a substance containing oil, which is in its collection effect and usability improved in comparison with known systems of the prior art. The characteristic features of the system according to the invention are stated in Claim 1. In addition, the invention is also intended to create a method for manually cleaning an environment of a substance containing oil, which makes cleaning more effective. The characteristic features of the method according to the invention are stated in Claim 15.

Owing to the system, the collection of a substance containing oil becomes more effective. Collection capacity has been created in the tool by arranging at least some of its bristles as bunches of bristles. In addition, at least some of the bristle bunches are at a distance from each other in the brush element of the tool. The free gaps in terms of the bristles of the brush element, which are between the bristle bunches, effectively collect large amounts of the oily substance. In addition, in this way the oily substance can also be easily and rapidly detached from the tool when cleaning it. On the other hand, the tool also does not need to be cleaned so often, due to its greater collection capacity. All these factors accelerate cleaning operations. The scraping elements of the scraper of the cleaning tool that also belongs to the system can be dimensioned to fit into the gaps between the bristle bunches. The oily substance can then be very effectively detached from the bristle bunches and their gaps.

The cleaning tool for cleaning the oil-collection tool accelerates and boosts the cleaning of the tool when performing collection and thus also helps to accelerate the collection of oil. According to one embodiment, the cleaning tool can be rapidly arranged in the collection receptacle and also rapidly detached from it if required (for example, when changing bag).

The system and method according to the invention for cleaning an environment of a substance with an oily content improve the logistics relating to the cleaning operations. Other additional advantages achieved by means of the invention appear in the description portion and specific features in the accompanying Claims.

The invention, which is not restricted to the embodiments described in the following, is described in greater detail with reference to the accompanying figures, in which
- Figure 1: shows one example of different situations where the tool is used when cleaning an environment manually,
- Figure 2: shows one example of the parts belonging to the system,
- Figures 3 and 4: show a first example of the hand tool, seen from different directions,
- Figures 5 and 6: show a second example of the hand tool, seen from different directions,
- Figures 7 and 8: show a third example of the hand tool, not forming part of the invention, seen from different directions,
- Figures 9 - 11: shows a first example of the hand-tool cleaning tool,
- Figures 12 and 13: show a second example of the hand-tool cleaning tool,
- Figures 14 and 15: show a third example of the hand-tool cleaning tool,
- Figures 16 and 17: show a fourth example of the hand tool, not forming part of the invention, seen from different directions,
- Figure 18: shows a fourth example of the hand-tool cleaning tool,
- Figures 19a - 19d: show various embodiments of the hand tool, on a schematic level, and
- Figures 20a - 20d: show various embodiments of the hand tool and its cleaning tool, on a schematic level.

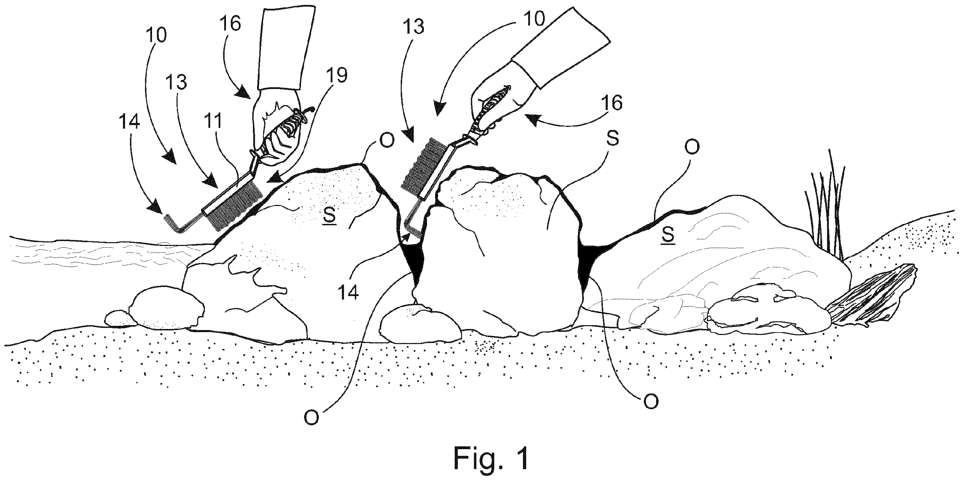

Figure 1 shows one example of manually cleaning an environment of a substance O containing oil using the tool 10. In Figure 1, the hand tool 10 is used in two different situations to clean a shore after an oil spill. The oil O is then collected manually using the tool from the shore and from objects S located on the ground. In addition, the tool can also be used after collection to clean the objects S, such as, for example stones or rocks. Thus the cleaning of an environment of a substance O with an oil content can be understood widely within in the context of the invention. The tool is equally suitable for collection the substance O and, in addition, for cleaning objects S of oil O.

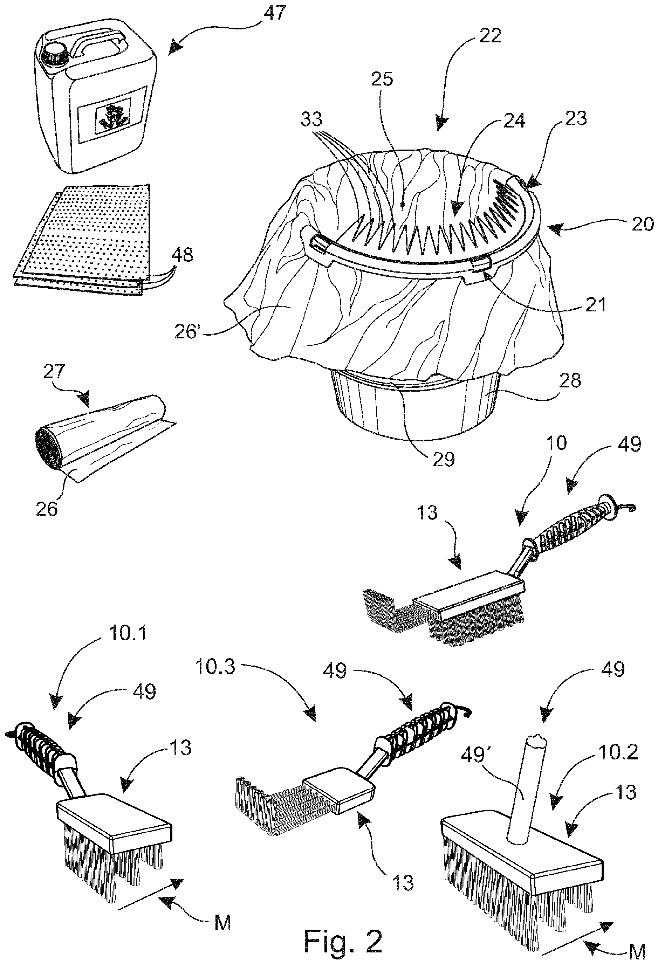

Figure 2 shows one example of the system for manually cleaning an environment of a substance O containing oil. In its basic form, the system includes one or several hand tools 10, 10.1 - 10.3 and one or several cleaning tool 20, 20.1 - 20.3 for cleaning the hand tool 10, 10.1 - 10.3 of a substance O with an oil content. The hand tool 10, 10.1 - 10.3 includes in its basic form a handle part 49 and a brush element 13 attached to the handle part 49. Bristles 40.1, 40.2 are fitted to the brush element 13. Instead of bristles, it is possible to equally refer to brush fibres. For its part, the cleaning tool 20, 20.1 - 20.3 includes one or several scrapers 24, 24.1 - 24.3. The scraper 24, 24.1 - 24.3 is equipped with scraping elements 33, 33.1 - 33.3. The scraper 24, 24.1 - 24.3 and particularly its scraping elements 33, 33.1 - 33.3 are intended for cleaning the brush element 13 of the hand tool 10, 10.1 - 10.3 of the substance O with an oil content. The substance O with an oil content is detached from the brush element 13 with the aid of the scraper 24, 24.1 - 24.3.

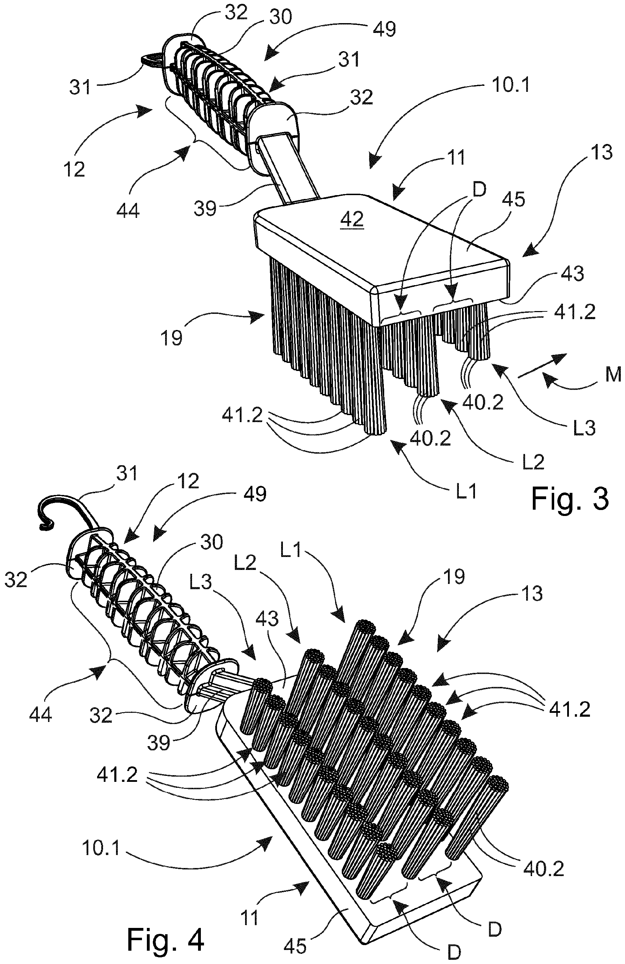

Figures 3 - 6 show three examples of the hand tool 10.1, 10.2 belonging to the system, seen from different directions. By means of the tool 10.1, 10.2 an environment can be manually cleaned of a substance O containing oil. The tools 10.1, 10.2 differ from each other in their handle parts 49. The tool 10.1 shown in Figures 3 and 4 includes as a basic component a hand grip 12 fitted to the handle part 49 and a brush element 13. The hand grip 12 is in the tool 10.1 to allow it to be held in the hand 16 with one hand as shown in Figure 1 and to use the tool to perform cleaning operations manually by human labour.

The hand grip 12 of the hand tool 10.1 shown in Figures 3 and 4 includes end flanges 32 and a grip area 44 arranged between them. The tool 10 is held in the hand 16 from the grip area. Thanks to its end flanges 32, the oily and therefore also slippery tool 10.1 will remain firmly in the hand 16 of its user, even though they might have additionally an oily and thus slippery protective glove on their hand 16. In addition, the end flanges 32 also ensure that the tool 10.1 will remain in the hand 16 without any need to press unreasonably hard on the tool 10.1. This will be less tiring for user of the tool 10.1. In addition, the user of the tool 10.1 can, without danger of their grip slipping, apply more pressure to the tool 10.1 which is slippery with oil, against the object S to be cleaned, for example, when scrubbing, which boosts cleaning. The end flanges 32 and the grip area 44 between them can be a moulded plastic piece of a single material. Thus, all the components belonging to the handle 12 can be integrated in the moulded piece.

At the end of the handle 12 there can be a hanger 31, of which a hook is now shown as an example. By means of the hook the tool 10.1 can be put in a solvent overnight, as described slightly later in the method description. The hook is now integrated with the second flange 32.

The grip area 44 of the handle 12 can include grip shapes 30. By these a good hold of the tool 10.1 can be ensured when it is in its user's hand 16. The grip shapes 30 can be cuts or similar geometric shapes made in the grip area 44, for examples, in the moulding. By means of the cuts in the handle 12 material is also saved when making the tool 10 and also increases friction, which improves the handling of the tool. The grip shapes 30 can be in the grip area 44, on opposite sides to each other. The grip area 44 can, in addition, be slightly swollen in the middle (oval shaped) and narrower at the ends, to ensure a good and ergonomic grip on the handle 12. The central area of the grip area 44 can then divide the orientation of the cuts. The cuts can be oriented towards the end flanges 32, as can be clearly seen in Figures 3 and 4.

The brush element 13 is attached to the handle 12, more generally to the handle part 49. The brush element 13 can be directly attached to the handle 12 or also through an auxiliary arm 39, as shown in the embodiment of Figures 3 and 4. The brush element 13 includes a body 11. The body 11 can be formed, for example, from a flat piece 45. The body 11 can also be of plastic and a moulded piece. The handle 12, the auxiliary arm 39, and the body 11 can all be a single integral moulded piece.

The flat piece 45, i.e. more generally the body 11 of the brush element 13, and thus also the brush element 13, are arranged to attach to the handle 12 in such a way that they are on different planes. In the case according to the embodiment, this attachment is implemented using an auxiliary arm 39, which is between the handle 12 and the brush element 13. The auxiliary arm 39 is at an angle relative to the brush element 13 and the handle 12. The handle 12 and the brush element 13 being on different planes, the handle 12 has an ergonomically better angle. This improves the force acting on the object S being cleaned. The tool 10.1 of Figures 3 and 4 can also be referred to as a scraper-brush. It is particularly intended for collecting an oily substance O from on top of stones S.

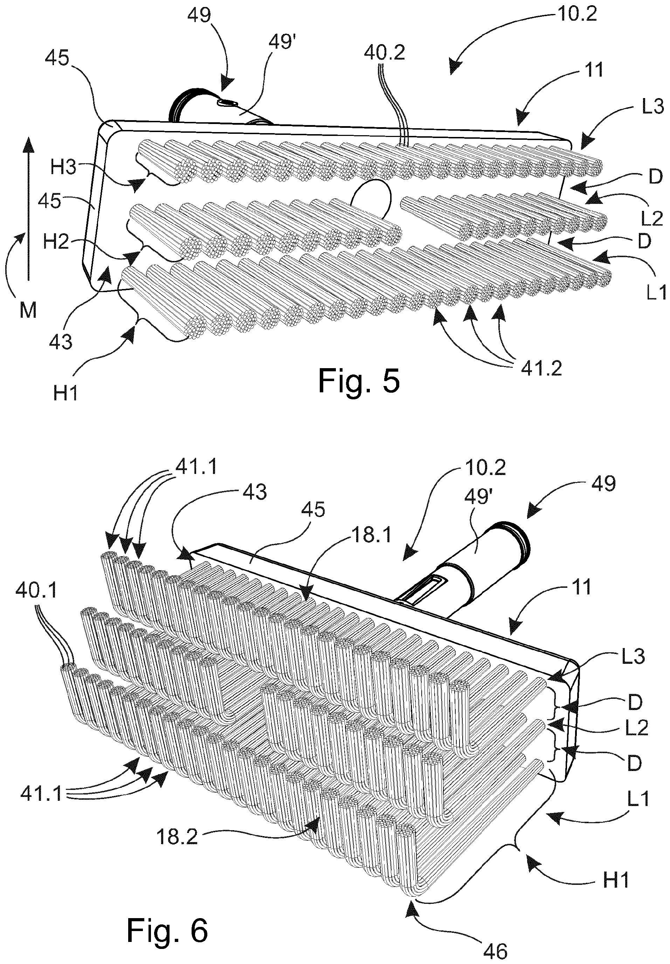

In the tool 10.2 of Figures 5 and 6, the handle part 49 includes an adapter component 49'. An extension arm (not shown) can be detachably attached to the adapter component 49' for using the hand tool 10.2 with two hands, for example, when standing. The extension arm can be attached to the adapter component 49' by a quick-release attachment. The extension arm can be, for example, a metal 130-cm long arm, which permits working while standing. At the end of the arm is an end stop, which prevents the grip from slipping and provides the necessary support when handling the brush.

In at least one hand tool 10, 10.1 - 10.3 belonging to the system, at least some of the bristles 40.1, 40.2 are arranged to form bristle bunches 41.1, 41.2 in the brush element 13. Instead of bristle bunches, it is also possible to speak of bristle tufts. The bristle bunches 41.1, 41.2 effectively hold the oily substance O inside them. In addition, the bristles 40.1, 40.2 support each other in the bundles. They then cannot bend as greatly as they would if they were, for example, distributed evenly in the brush element 13. The bristles 40.1, 40.2 will then withstand even intense loading, for example, when scrubbing surfaces, without permanent deforming (bending).

In addition, in at least one hand tool 10, 10.1 - 10.3 belonging to the system, at least some of the bristle bunches 41.1, 41.2 formed of bristles 40.1, 40.2 are at a distance D to each other in the brush element 13. In the applicant's pilot-stage tests, it has been observed that a large part of the oily substance O adheres to the gaps D remaining between the bristle bunches 41.1, 41.2. Instead of gaps, it is possible to speak of slots. The gaps D are empty space, i.e. free of bristles 40.1, 40.2. They collect a large amount of the oily substance O in connection with the brush element 13. The bristle bunches 41.1, 41.2 delimiting the gaps D also bind the oily substance O into the gaps D. Owing to the bristle bunches 41.1, 41.2 and the gaps D free of bristles that remain between them, by means of the hand tool 10, 10.1 - 10.3 the oily substance O is effectively bound to the brush element 13 of the hand tool.

According to one embodiment, the hand tool's 10.1 - 10.3 bristle bunches 41.1, 41.2 can be arranged in the brush element 13 in one or more lines L1 - L3. The lines L1 - L3 then each form a kind of trowel. The gaps D then remain between the lines L1 - L3. In both of the tools 10.1, 10.2 shown in Figures 3 - 6 are three lines L1 - L3 of bristle bunches 41.1, 41.2. Two gaps D free of bristles 40.1, 40.2 then remain between the lines L1 - L3. The oily substance O is made to adhere to the gaps D with the aid of the bristle bunches 41.1, 41.2. When collecting, the gaps D can be filled with the oily substance O.Thus with a single cleaning relatively much oily substance O can be collected, compared, for example, to a tool, in which the substance O is collected only between individual bristles 40.1, 40.2. Despite the relatively large amount of oily substance O collected using the tool 10.1, 10.2, the cleaning of the tool is also easy. For its part, this is also permitted by the gaps D free of bristles 40.1, 40.2 between the bristle bunches 41.1, 41.2, as will be explained hereinafter in the description.

The length H1 - H3 of the bristle bunches 40.1, 41.2 is arranged to differ between the lines L1 - L3. The bristle-bunch lines L1 - L3 of different length improve the collecting power of a tool 10.1, 10.2 with several lines of bristle bunches 41.1, 41.2. The lines L1 - L3 of different-length bristle bunches can collect different amounts of oily substance O in their gaps. The innermost line gaps will then also collect more oily substance O with a single collecting movement of the tool, and thus further increase the collecting power of the tool 10.1, 10.2.

According to one embodiment, the lines L1 - L3 formed of bristle bunches 41.1, 41.2 in the brush element 13 are arranged to rise in steps in terms of the length H1 - H3 of the bristle bunches 41.1, 41.2. For example, in the three-line embodiment shown in the figures, such a bristle height rising in steps makes possible effective collection, if the tool 10.1, 10.2 is moved in a specific direction M against the surface S to be cleaned. This permits a good collection effect to each line gap D. In this way, also the line gaps that are farther behind in the brush element 13 in the direction of movement (reference sign M) of the tool 10.1, 10.2 effectively fill with the oily substance O. In the brush element 13, a first bristle-bunch line L3, in which there are the shortest bristles 40.1, 40.2, more generally bristling, of the brush element 13, is against the collection direction M.

According to one embodiment, the bristle bunches 41.1, 41.2, arranged in the brush element 13 at a distance D from each other, are in lines L1 - L3 mainly parallel to each other. In this way, the bristles 40.1, 40.2 remain in better operating condition. Thus, they cannot bend in such a way that permanent deformations (bending) could form in them. Thus, most of the bristles 40.1, 40.2 are mainly always at right angles to the surface S being cleaned. This gives the tool 10.1, 10.2 a longer life.

The brush element 13 includes a body 11. In the case according to the embodiments, the body 11 is now formed of a flat piece 45. The body 11 includes one or several flat surfaces 42, 43, 52, 53. The bristle bunches 41.1, 41.2 are fitted to the body 11 on one or more flat surfaces 43, 53. The bristles 40.1, 40.2 are then perpendicularly in the flat piece 45 too. This also improves the durability of the tool in as much as most of the bristles are mostly always perpendicular to the surface S being cleaned. This prevents permanent deformations taking place in them due to bending. The bristles cannot then bend as easily as they would, for example, if they were slanting.

The brush part 19 formed of bristle bunches 41.2 is fitted to one flat surface 43 of the body 11 formed by the flat piece 45. In addition, the second flat surface 42 on the opposite side of the body 11 formed by the flat piece 45 can be free of bristles. This too improves the tool's usability, as will be described hereinafter.

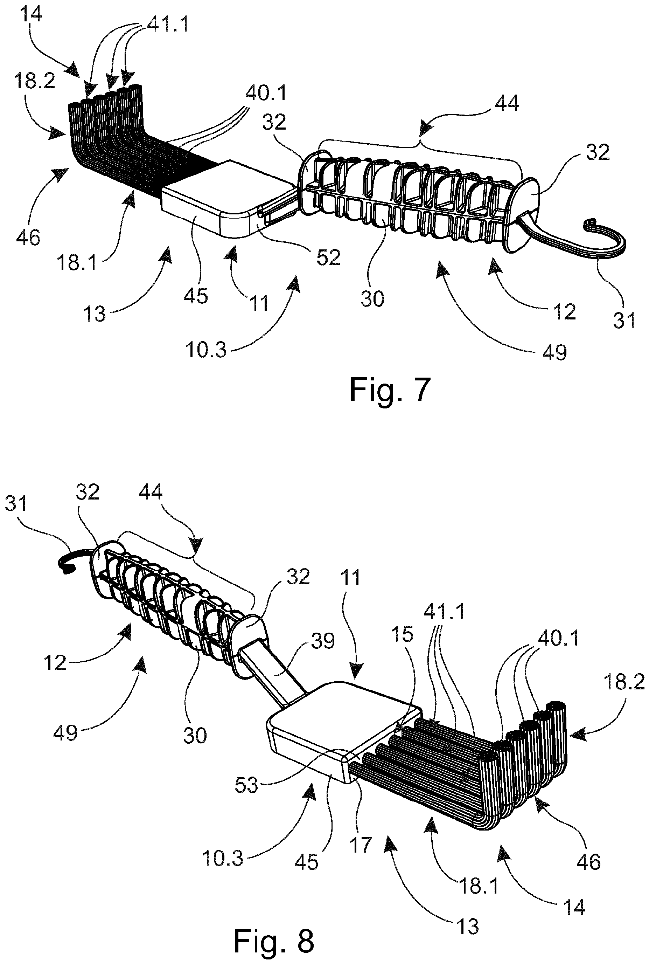

The tool of Figure 5 can correspond in implementation and operating principle to the brush element 13 of the tool 10.1 shown in Figures 3 and 4. The implementation and operating principle of the tool of Figure 6 is in turn described in greater detail in connection with the tool 10.3 shown in Figures 7 and 8. The tool of Figure 5 can also be referred to as a rock brush. It is particularly intended for collecting an oily substance O from large surfaces, such as, for example, rocks. The tool of Figure 6 can, in turn, also be referred to as a shore brush. It is particularly intended for collecting an oily substance O from shore water and shore sand.

In the tool of Figure 6, however, the bristle bunches 41.1 are in three lines L1 - L3 and open gaps D free of bristles 40.1 remain between the lines L1 - L3. In addition, the bristle bunches 41.1 in adjacent lines L1, L2, L3 are of different lengths and they are once again in steps. In the tool of Figure 6, the bent bristles 40.1 are joined to the flat surface 43 of the body 11 of the brush element 13 on the brush part 18.1. Such "hook bristles" act like a spade, lifting an oil lump, but nevertheless allowing water to flow off from between the bristle bunches 41.1 and the bristles 40.1. The body 11 of the tool 10.2 of Figures 5 and 6 can be a flat piece 45 with a size of, for example, 60 x 250 mm.

Figures 7 and 8 show a third example of the hand tool 10.3, not forming part of the invention, seen from different directions. This otherwise corresponds to the tool 10.1 shown in Figures 3 and 4 with its hand grip 12, except that the brush element 13 differs in the bristles 40.1 and the location of the bristle bunches 41.1 in the brush element 13. Here too, the body 11 of the brush element 13 is formed of a flat piece 45. The tool 10.3 of Figures 7 and 8 can also be referred to as a hook brush. It is especially intended for collecting an oily substance O from between stones S and their side surfaces and from ponds.

The bristle bunches 41.1 forming the bristle part 13 of the brush element 12 are fitted to the flat surface 53 of a flat piece 45, more generally a body 11, at the end 15 of the hand tool 10, 10.3, being the opposite end to the handle part 49. By means of such a brush element 13 an oily substance O can be removed, for example, by scraping it from narrow gaps. The flexible but stiff bristles 40.1 permit an oily substance 10 to be collected even from cramped places.

According to one embodiment, the bristles 40.1 belonging to the bristle bunch 41.1 can be bent. Thus further improves the reach of the brush element 13 in narrow gaps. The bending of the bristles 40.1 can be of the magnitude of 45 - 110 degrees.

According to one embodiment, the bristles 40.1 are arranged to be joined to the flat surface 43, 53 of the flat piece 45, more generally the body 11. The flat surface 53 can be in the edge 17 of the flat piece 45. Here, the bristles 40.1 include a bristle part 18.1 parallel to the flat piece 45, more generally the body 11, and joined to the flat surface 53 of the body 11, and a bent bristle part 18.2 following it. Between the bristle parts 18.1, 18.2 there is a bend 46. In the embodiment shown, the bend is at right-angles. Such a bent bristle part 14 is especially practical for collecting an oily substance O from the surface of water. When the bent bristle part 18.2 points upwards, for example, the oily substance O collected from water remains securely on top of the bristle part 18.1 fitted in the body 11, but the water can flow away. The tool 10.3 then acts as a kind of collecting scoop.

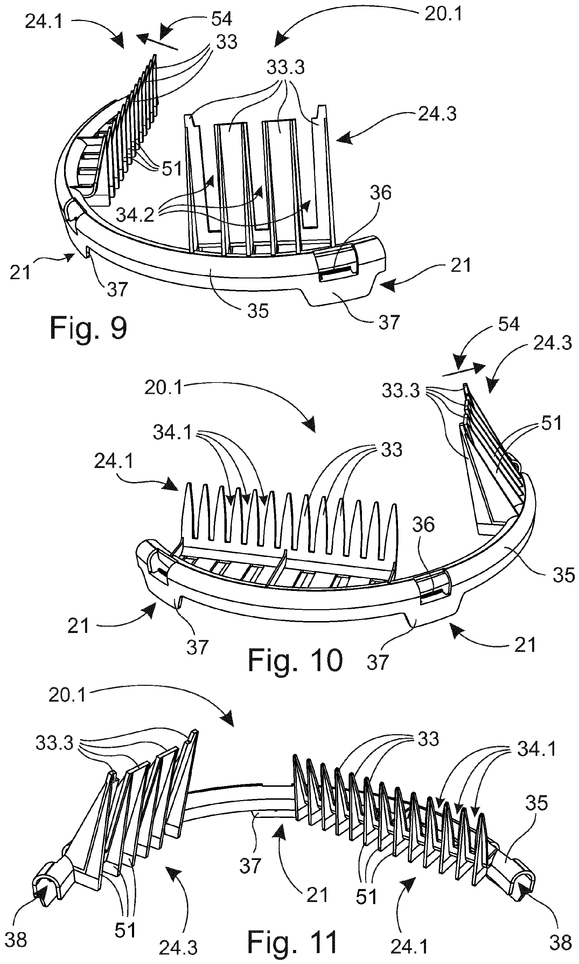

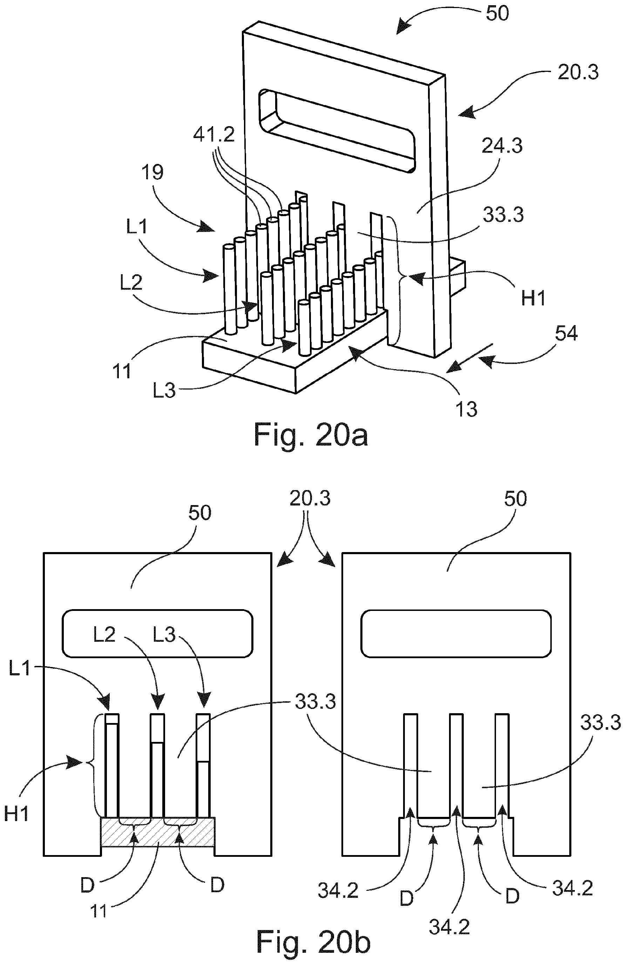

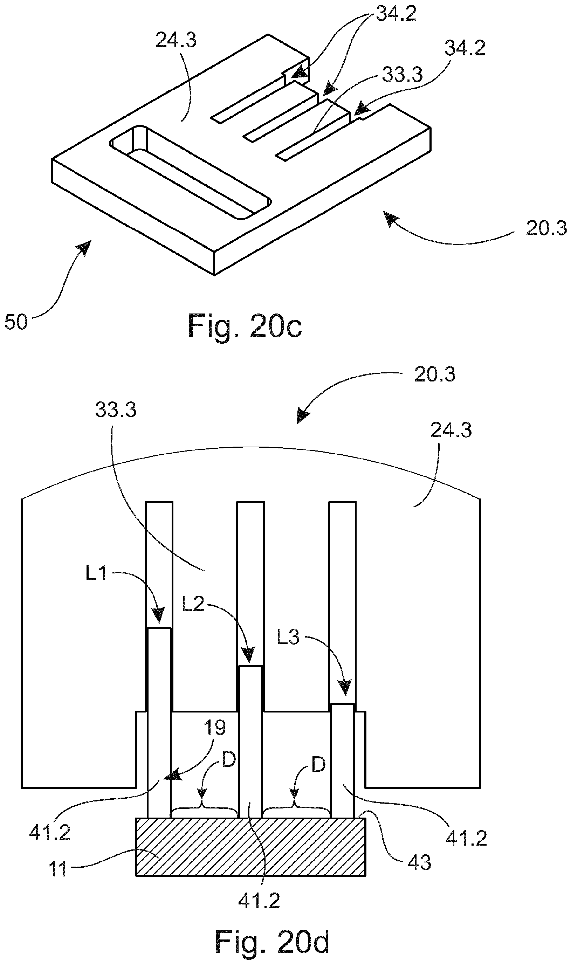

Figures 9 - 15 show three cleaning tools 20.1 - 20.3 for the system according to the invention, for cleaning an oil-collection hand tool 10, 10.1 - 10.3, seen from different directions. In other words, in addition to the hand tool 10, 10.1 - 10.3, the cleaning tools 20.1 - 20.3 can also be part of the system. The scraper elements 33.1 - 33.3 of the scraper 24.2 24.3 of at least one cleaning tool 20.1 - 20.3 and the bristle bunches 41.1, 41.2 of the brush element 13 of the hand tool 10, 10.1 - 10.3 belonging to the system are arranged relative to each other, in such a way as to permit the scraping of a substance O with an oil content from between the bristle bunches 41.1, 41.2 using the scraper elements 33.1 - 33.3. In other words, the scraper elements 33.1 - 33.3 have been able to be arranged to mostly fill the space D remaining between the bristle bunches 41.1, 41.2. In addition, the scraper elements 33.1 - 33.3 have been able to be arranged also to extend to the base of the bristle bunches 41.1, 41.2. The scraper elements 33.1 - 33.3 of the scraper 24.2, 24.3 are then dimensioned in such a way that they fit into the gaps D remaining between the bristle bunches 41.1, 41.2. The width of the scraper elements 33.1 - 33.3 is dimensioned in such a way that they fill the gaps D most of part, but nevertheless in such a way that they can travel in the gaps D when the tool 10, 10.1 - 10.3 and the cleaning tool 20.1 - 20.3 are moved relative to each other (reference number 54 in Figure 20a), the scraper elements 33.1 - 33.3 being in the gaps D of the bristle bunches 41.1, 41.2. In the same way, the slots or gaps 34.2 remaining between the scraper elements 33.1 - 33.3 are also dimensioned according to the bristle bunches 41.1, 41.2. The width of the gaps 34.2 can then correspond to the thickness of a bristle bunch 41.1, 41.2. The depth of the gap 34.2 can correspond to the length Hx of the bristles 40.1, 40.2 of the bristle bunch 41.1, 41.2. Figures 20a and 20d also illustrate this mutual dimensioning between the scraper elements 33.3 of the scraper 24.3 and the bristle bunches 41.2.

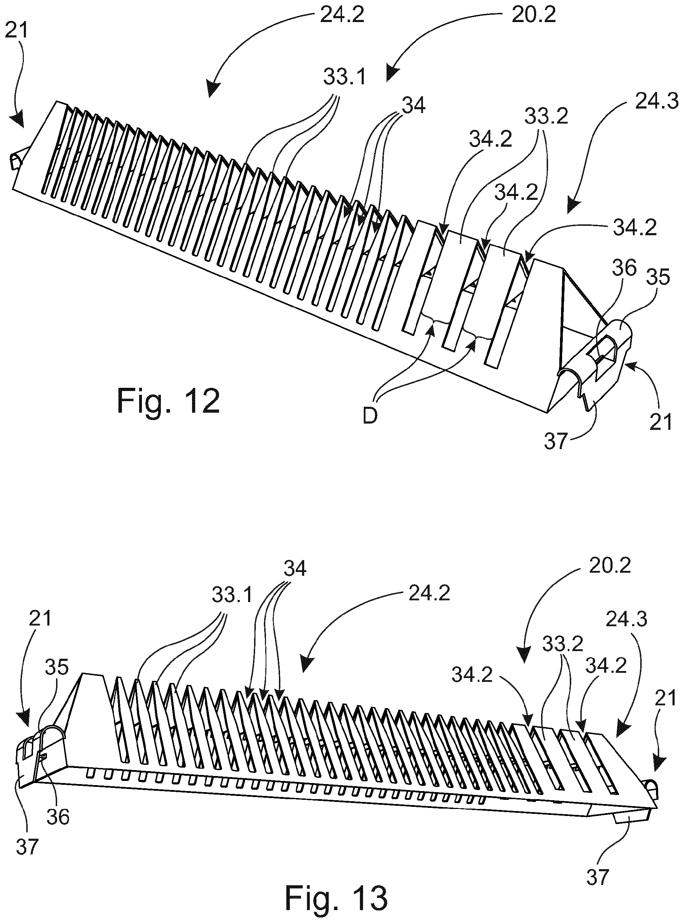

The embodiments of the cleaning tool 20.1, 20.2 shown in Figures 9 - 13 can be detachably attached to a receptacle 22, in which the oily substance O is arranged to be collected using the hand tool 10, 10.1 - 10.3. Thus the system can additionally also include one or more receptacles 22 for the oily substance O. For this purpose, the cleaning tools 20, 20.1, 20.2 can include quick-release elements 21 for detachably attaching the cleaning tool 20, 20.1, 20.2 to the receptacle 22 and even more particularly to its upper edge 23. The curved cleaning tool 20.1 of Figures 9 - 11 is intended for a pail 28 with a circular upper edge 23. The elongated cleaning tool 20.2 of Figures 12 and 13 is intended for a receptacle with a square upper edge.

The embodiments of the cleaning tool 20.1, 20.2 shown in Figures 9 - 13 each include two scrapers 24.1 - 24.3 for cleaning the brush elements 13 belonging to the hand tool 10, 10.1 - 10.3. The scrapers 24.1 - 24.3 are fitted to the cleaning tools 20.1, 20.2 in such a way that they are fitted to the area of the receptacle 22 when the cleaning tool 20.1, 20.2 is attached to the receptacle 22.

The embodiments of the cleaning tool 20.1, 20.2 shown in the Figures 9 - 13 include not only a scraper 24.3 for cleaning the gaps D of the bristle-bunch lines L1 - L3, but also a comb-like scraper 24.1, 24.2. The comb-like scraper 24.1, 24.2 is equipped with a sharp scraper elements 33, 33.1 for scraping the oily substance O off the brush element 13. The comb-like scraper 24.1, 24.2 is used to remove the oily substance O from the brush element 13 of the tool 10, 10.1 - 10.3 in the same direction M as the tool 10, 10.1 - 10.3 is intended to collect the oily substance O. In other words, this direction is at right angles to the direction of the bristle-bunch lines L1 - L3.

In the second cleaning tool 20.2 of the hand tool 10, 10.1 - 10.3 shown in Figures 12 and 13, there are also two scraper models. These are a "finger comb" (reference number 24.3) and a "spike comb" (reference number 24.2). In the finger comb the interval of the scraper elements 33.2 is according to the gaps D of the bristle-bunch lines L1 - L3 and in the spike comb the interval is according to the bristle bunches in the same line. Thus, the bristle bunches can be said to be in the lines in the tools 10.1 - 10.3 also perpendicular to the bristle-bunch lines L1 - L3 differing in height H1 - H3 referred to above.

The body of the cleaning tool 20.2 is now a triangular profile. The triangular structure stiffens the cleaning tool 20.2. In addition there are also vertical stiffeners inside the triangular profile. This cleaning tool 20.2 too permits the combing of the brush element 13 of the tool 10, 10.1 - 10.3 on both sides. The cleaning tool 20.2 is placed in the centre of the receptacle and attached at its ends to the edges of the receptacle 22. All the collected oil O then flows into the receptacle 22. This model is for attaching to a square pail. The triangular scraper can also be adapted to a circular pail. The spike comb can then be shorter.

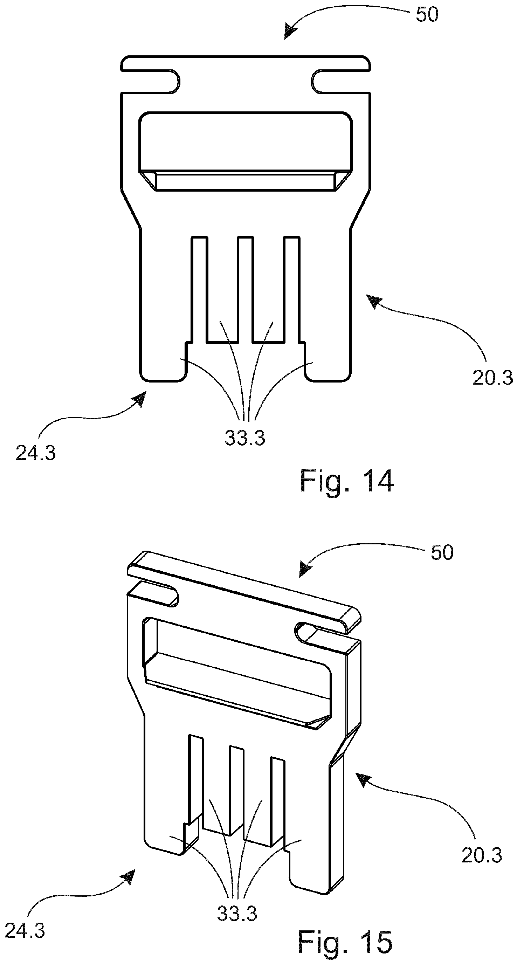

Figures 14 and 15 show a third example of the cleaning tool 20.3 for cleaning the oil-collection hand tool 10, 10.1 - 10.3 for the system according to the invention. This cleaning tool 20.3 is a hand-held model. The cleaning tool 20.3 includes a hand grip 50 integrated in the flat body component, for holding the cleaning tool 20.3 in the hand. The hand grip 50 is now a handle with a loop, from which a compression hold can be obtained by the hand on the cleaning tool20.3. The cleaning tool 20.3 then remains firmly in the hand. The scraper elements 33.3 of the scraper 20.3 and the gaps 34.2 between them are implemented using the same principle as in the cleaning tools 20.1, 20.2 to be attached to the receptacle 22. The scraper 20.3 can be used to scrape the oily substance O out of the gaps D that remain between the bristle bunches 41.2 of the brush element 13.

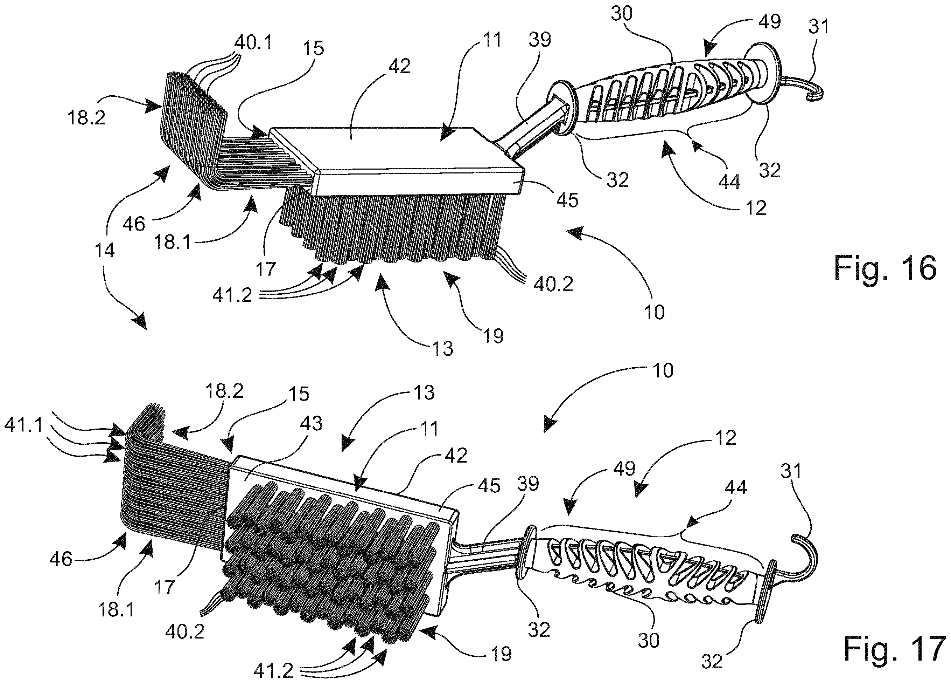

Figures 16 and 17 show yet a fourth example of the hand tool 10, not forming part of the invention, seen from different directions. According to Figures 3-8, there can be a single brush part 14, 19 fitted to the brush element 13 of the hand tool 10.1 - 10.3, but in it there can also be several brush parts 14, 19. In the embodiment of the tool 10 shown in Figures 16 and 17 there are partly the same features as in the tools 10.1 - 10.3 described above. Thus the advantages gained with the said features and described in greater detail in connection with this embodiment also suit the embodiments already earlier presented in the description, i.e. tools 10.1 - 10.3.

Here, two brush parts 14, 19 are fitted to the body 11 of the brush element 13 formed from the flat piece 45. Thanks to the two brush parts, the tool is more versatile than tools known from the prior art. The first 14 of these brush parts is fitted to the flat piece 45 in such a way that it is in the end 15 of the tool 10 in a corresponding manner to that shown in the tool 10.3 in Figures 7 and 8. In addition, the first brush part 14 is also bent. Thus the first brush part 14 equipped with one or more bends 46.

The second brush part 19 is fitted to the flat piece 45, more generally to the body 11, mainly perpendicularly to the first brush part 14 thus also to the surface 43 of the flat piece 45 and particularly to the plane defined by it. The second brush part 19 and its bristles 40.2 are then also perpendicular to the longitudinal direction of the elongated tool 10, 10.1, 10.2 and, for example, to the handle 12. Here, the mainly perpendicularity relative to the first brush part 14 can also permit for the second brush part 19 a small deviation from a 90-degree angle (not shown). This takes place, for example, when the first brush part 14 is arranged at the end 15 of the tool 10, in a point part arranged in the edge 17 of the flat piece 45, the direction of which deviates slightly from the basic orientation of the flat piece 45. On the other hand, instead of a special point part, the flat piece 45 itself can be slightly bent from the edge 17 of the end 15, in which bent part the first brush part 14 is then arranged. The bristles 40.2 are also parallel in the flat piece 45.

Being mainly perpendicular and mainly parallel in the flat piece 45, the bristles 40.2 of the second brush part 19, more generally the brush element 13, cannot bend as easily, when the tool 10, 10.1, 10.2 is used to scrub the object S being cleaned. The brush part 19, more generally the brush element 13, then becomes more durable. Permanent deformations (bending) do not then arise in its bristles 40.2, as would happen if the bristles 40.2 were oriented in different directions.

According to one embodiment, the second brush part 19, more generally the brush element 13, can include corrugated bristles 40.2. In the case according to the embodiment, all the bristles 40.2 of the second brush part 19 are corrugated. The corrugation of the bristles 40.2 first of all improves the capacity and ability of the brush part 19 to hold the oily substance O. By means of the corrugation, the oily substance O remains better attached in the brush part 19 and it can also be, as it were, absorbed between the bristles 40.2. Pockets are then form between the corrugated bristles 40.2, in which the oily substance O remains. More oily substance O then adheres to the brush part 19 in a single collection, i.e. between the cleaning stages of the tool 10. These advantages also help to accelerate the collection of the oily substance O and the cleaning of the environment. On the other hand, by means of the corrugated bristles 40.2 the effect of the tool 10 is also improved in the surfaces' cleaning stage following the collection of the oily substance O. By means of the corrugated bristles 40.2, a greater amount of the composition 47 assisting in cleaning can be taken at one time to the object S being cleaned. For its part, this too makes the cleaning of the environment more efficient and rapid. In addition, the corrugation also helps to keep the shape of the bristle and thus of the bristle bunches.

According to one embodiment, the bristles 40.1 of the first brush part 14 are fitted to the edge 17 of the flat piece 45, more generally of the body 11. The edge 17 is the end edge of the flat piece 45 opposite the handle 12, more generally the handle part 49. The bristles 40.1 of the first brush part 14 are arranged to form a flexibly returning scraper element at the end 15 of the tool 10, 10.3. According to one embodiment, this can be implemented by forming the bristles 40.1 into bristle bunches 41.1. One line of bristle bunches 41.1 is in turn fitted to the end 15 of the tool 10, as was also the case in the embodiment of the tool 10.3 shown in Figures 7 and 8. The scraper element formed of bristles 40.1 bends and returns easily and thus also conforms to local irregularities in the surface being scraped. The first brush part 14 then always retains its contact over its whole width with the surface being scraped. The diameter of the bristle bunches 41.1 at their base can be, for example, 5 - 15 mm and even more particularly 5 - 10 mm. For its part, the thickness of the flat piece 45 can then be, for example, 10 - 20 mm.

The bristles 40.1 of the first brush part 14 include a brush part 18.1 joined to the flat surface 43 of the flat piece 45 and parallel to that and a bent brush part 18.2 following it. The bristles 40.1 are unified and there is a bend 46 in them between the brush parts 18.1, 18.2.

The bend in the first brush part 14 can be, for example, 45 - 110 degrees. The bend can be created by using the bend 46 shown in the embodiment, which in the case according to the embodiment shown is about 90 degrees. By means of the bent end of the tool 10, 10.3, the oily substance O can be scraped out of gaps in the objects S, such as, for example, stones and rocks. In addition, thanks to its bent bristles 40.1 the tool 10 also acts as a collecting scoop, as referred to above.

The bristles 40.1 of the first brush part 14 can be bent, for example, to the side of the handle 12. The bent brush part 18.2 of the first brush part 14 will then be above the surface 42 of the flat piece 45 for most of its length. When this is combined with locating the handle 12 and brush element 13 on different planes relative to each other, a first brush part 14 with a bent brush part 18.2 is achieved, which in some cases is better in collecting and cleaning the oily substance O from cramped places. On the other hand, the first brush part 14 can also be bent to the side of the second brush part 19 (not shown). This makes the tool 10, 10.3 and especially its brush element 13 lower, which can also facilitate access to cramped places.

As already stated, the bristles 40.1, 40.2 of the first and second brush parts 14, 19, more generally of at least one brush part 14, 19, are arranged to form bristle bunches 41.1, 41.2 in the brush element 13. In the bristle bunches 41.1, 41.2, the bristles 40.1, 40.2 support each other, which makes them more sturdy and the bristles 40.1, 40.2 cannot bend so easily. In the second brush part 19, the oily substance O collected using the tool 10, 10.1, 10.2 also remains better, particularly in the gaps D remaining between the bristle bunches 41.2, increasing the tool's 10, 10.1, 10.2 collection capacity. In addition, the bristle bunches 41.1, 41.2 simplify the manufacture of the brush element 13. The brush parts 14, 19 can be simply formed in the flat piece 45, if the bristles 40.1, 40.2 are shot into it as bristle bunches 41.1, 41.2.

The second brush part 19 is fitted to one surface 43 of the flat piece 45 and the second surface 42 on the opposite side of the flat piece 45 can be free of bristles. This also improves the tool's 10, 10,1, 10.2 usability. By means of the brush part 18.2 bent on the side of this surface 42 of the first brush part 14 cramped places can be reached better than before to collect the oily substance O, because there are no bristles on the second surface 42 of the piece 45 in the way. The second brush part 19 on only one side of the piece 45 also facilitates and accelerates the cleaning of the tool 10, 10.1, 10.2. The tool 10, 10.1, 10.2 need not be turned in the hand 16 for cleaning, when the oily substance O is collected, for example, in a receptacle.

The material of the bristles 40.1, 40.2 can be, for example, plastic, for example, polypropylene (PP) or polyester, for example, PET. Particularly the bristles 40.1 of the first brush part 14 can be polyester. The bristles 40.1 can then be given a durable bend 46 by heating, which will not straighten in the use of the tool 10. Correspondingly, the bristles 40.2 of the second brush part 19 can be polypropylene. This will make the brush part 19 highly resistant to wear and abrasion. The bristles can also be of metal wire. A plastic bristle is, however, more advantageous than a metal wire bristle, because it will withstand loading better. In other words plastic bristles return to their original shape better when loading ceases.

The length of the bristles 40.1 of the first brush part 14 can be 60 - 160 mm, more particularly 80 - 140 mm and, for example, 110 mm. The ratio of the length of the brush parts 18.1, 18.2 can then be, for example, 2:1 - 3:1. Thus the length of the brush part 18.1 attached to the piece 45 can be 80 mm and the length of the bent brush part 18.2 can be 30 mm. The length of the bristles 40.2 of the second brush part 19 can be 20 - 80 mm, such as, for example, 40 mm. The second brush part 19 will then have a good storage capacity between the bristles 40.2 for the oily substance O and also for the composition 47 assisting in cleaning. Thus, the effective collection capacity of the tool 10, 10.1 - 10.3 will be greater and it will not need cleaning so often.

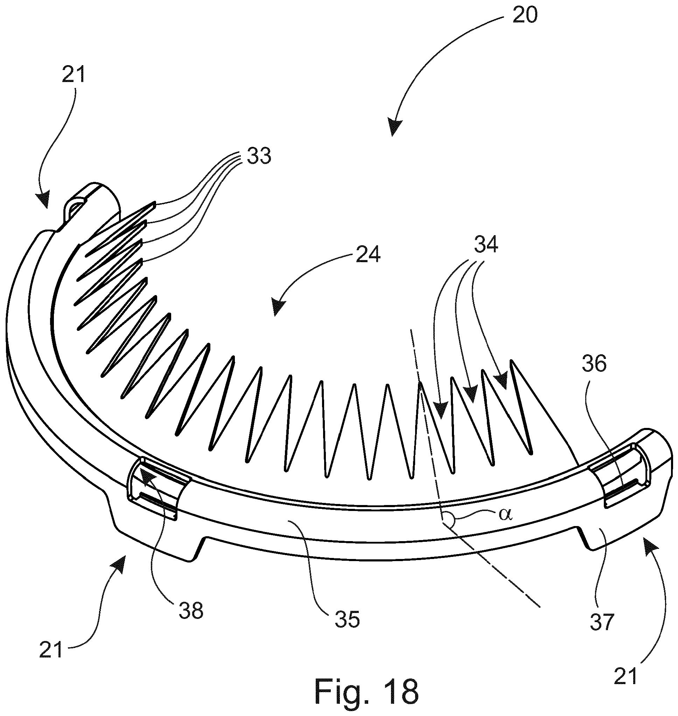

Figure 18 shows yet a fourth example of a cleaning tool 20 for cleaning the oil-collection tool 10, 10.1 - 10.3. Here the oil-collection tool 10, 10.1 - 10.3 can be, for example, a tool 10, 10.1 - 10.3 shown above in any of Figures 3 - 8, 16, 17, but also a tool with a different kind of brush element. Here too the basic components of the cleaning tool 20 include quick-release elements 21 and a scraper 24. By means of the quick-release elements 21 the cleaning tool 20 can be detachably attached, for example, to the upper edge 23 of a portable receptacle 22, such as, for example, the pail 28 equipped with a handle 29 shown in Figure 2. For this purpose the cleaning tool 20 is arranged in its basic shape to correspond to the curvature of the upper edge 23 of the pail 28 in a similar manner to the cleaning tool 20.1 shown in Figures 9 - 11.

In the cleaning tool 20, 20.1 there is a body 35, the basic cross-section of which is a U-profile, fitting the upper edge 23 of the pail 28. Thus a groove 38 is formed in the body 35. The dimensioning of the groove 38 is arranged to suit the annular edge reinforcement in the upper edge 23 of the pail 28. In the body 35 are now three quick-release elements 21, one in the middle and one at each end. By means of the quick-release elements 21 the cleaning tool 20 can be detached from the receptacle 22 and attached to the receptacle 22 manually, i.e. without tools. According to one embodiment, the quick-release elements 21 are formed of a tongue 36 facing in the direction of the groove 38 and a release element 37 arranged on the outer edge of the body 35 at the tongue 36. Their operation is described slightly later in the description in connection with the method description. The manner of performing the quick-release attachment of the cleaning tool to the receptacle 22 described here also applies to the cleaning tool 20.1, 20.2 presented already earlier in the description.

Here too, the scraper 24 belonging to the cleaning tool 20 is intended for cleaning the brush element 13 belonging to the tool 10, 10.1 - 10.3. The scraper 24 effectively detaches the oily substance O that has adhered to the brush parts 14, 19 forming the tool's brush element 13. The comb-like scraper 24 is fitted to the cleaning tool 20 in such a way that the scraper 24 of the cleaning tool 20 attached to the receptacle 22 is on the inside of the area of the opening of the receptacle 22, i.e. of the annular upper edge 23. The tool 10 is easily cleaned using the scraper 24 arranged inside the upper edge 23, more generally in the area of the receptacle 22. Cleaning will succeed by using one hand to hold the tool 10, 10.1 - 10.3, without the cleaning tool 20 needing to be separately touched or taken out.

In the case according to the embodiment, the scraper 24 is formed of a comb-like formation arranged on the side of the inner edge of the curved body 35 of the cleaning tool 20. The scraper 24 is arranged over the entire principal length of the body 35. The body 35 and thus also the cleaning tool 20 can cover, for example, half of the circumference of the upper edge 23 of the pail 28. The scraper 24 includes spike-like formations 33. The spikes can be, for example, triangular. Gaps 34 remain between the spikes 33. The gaps 34 can also be triangular. The gaps 34 then narrow towards their base and the spikes 33 that have narrow points widen in this direction. The angle α between the spike-like formations 33 and the body 35 of the scraper 24 can be, for example, 135 degrees.

When the tool 10, 10.1 - 10.3 is cleaned, the selected brush part 14, 19 of its brush element 13 is combed once or twice with the scraper 24, 24.1 - 24.3. The scraper's 24 spike-like formations 33 go between the bristles 40.1, 40.2 and/or the bristle bunches 41.1, 41.2 of the brush part 14, 19 when the tool 10 is pulled against the scraper 24. Thus, the tool 10, 10.1 - 10.3 is cleaned by scraping, i.e. combing it with straight pulling or pushing movements, i.e. linearly against the scraper 24, 24.1 - 24.3 of the cleaning tool 20, 20.1 - 20.3. For its part, this is made possible by the gaps remaining between the bristle bunches 41.1, 41.2 and the dimensioning of the scraper elements 33, 33.1 - 33.3 relative to the gaps. The scraper 24 then detaches the oily substance O that has adhered to the bristles 40.1, 40.2 of the brush part 14, 19 and between them, and it drops or flows into the receptacle 22. The spikes can have stiffener strips 51 (Figures 9 - 11) beneath them. The cleaning tool 20, 20.1 - 20.3 can also be an integral moulded piece.

Above, the scraper 24, 24.1 - 24.3 was fitted to a cleaning tool 20, 20.1, 20.2 detachably attached to the receptacle 22. The cleaning tool 20 was then attachable to the upper edge 23 of the receptacle 22. On the other hand, the scraper functionality can also be even integrated in the receptacle 22.

The system can include, in addition, a composition 47 for cleaning objects S of an oily substance O using the tool 10, 10.1 - 10.3. In addition, the system can include absorption cloths 48 for wiping the composition 47 and oily substance O from objects S. The composition 47 and absorption cloths 48 are used, for example, in the final stage of cleaning. Most of the oily substance O can have already been collected from the ground and shore, more generally from the objects S, using tools 10, 10.1 - 10.3. The significance and properties of the composition 47 and absorption cloths 48 will be described in the following description of the method.

The invention further relates to a method for cleaning an environment of an oily substance O. When starting to clean the environment the collectors of the oily substance O are equipped with a receptacle 22. In the upper edge 23 of the receptacle 22 there can be a cleaning tool 20, 20.1, 20.2 shown in Figures 9 - 13 or 18, for cleaning a tool 10, 10.1 - 10.3 equipped with a brush element 13. In addition, the receptacles 22 are equipped inside 25 with replaceable bags 26.

The oily substance O is collected in the receptacle 22 by using a tool 10, 10.1 - 10.3 equipped with a brush element 13. According to one embodiment, the tool 10, 10.1 - 10.3 can be, for example, that shown in Figures 3 - 8 or Figures 16 and 17. The oily substance O can be collected, for example, by scraping it from the object S with the tool 10, 10.1 - 10.3. When scraping, the oily substance O adheres to the brush part 13 of the tool 10, 10.1 - 10.3. Apart from scraping, a possible collection method can be to tap the tool 10, 10.1 - 10.3 repeatedly against the oily substance O. When scraping, the oily substance O can be collected, for example, from the surfaces of stones and rocks, from pools between stones, and from depressions and factures in rocks. When scraping, the tool 10, 10.1 - 10.3 is moved, for example, by pulling it against the object S being cleaned one or more times consecutively, for example, in the chosen direction. In the tool 10.1, 10.2 according Figures 3 - 6, the tool is pulled against the surface S being cleaning in the direction in which the height of the bristle-bunch lines L1 - L3 formed of bristles 40.2 increases. In Figures 2 and 3 this direction of movement is shown by the arrow M. When tapping, the tool 10, 10.1 - 10.3 is as if dipped several times consecutively in the oily substance O.

When collecting the oily substance O with the tool 10, 10.1 - 10.3, it adheres to, or is even absorbed in the gaps between the bristles 40.1, 40.2 or at least the bristle bunches 41.1, 41.2 formed of the bristles 40.1, 40.2. By scraping, much of the oily substance O can be collected from a large area in the initial stages of cleaning. Scraping is an effective collection method, if there is a thick layer of the oily substance O on the objects S. Tapping too is an effective collection method, because by using it more oily substance O is collected in a single collection cycle of the tool 10, 10.1 - 10.3, i.e. between cleanings of the tool 10, 10.1 - 10.3. In addition, there is not always space to scrape.

Correspondingly, by using the first brush part 14 fitted to the end 15 of the tool 10, 10.3 the collection and cleaning of objects S can be performed by scraping in cramped places and it can even be used to dig oil out of holes in stones. Being flat, the first brush part 14 collects, for example, as a structure formed of only one line of bristle bunches, the oily substance O, not only by collection taking place between its bristles 40.1, but also on the surface of the first brush part 14 and thus even of the brush element 13 of the tool 10, 10.3. The bristle bunches 41.1, formed of bristles 40.1, of the first brush part 14 also permit scraping from uneven surfaces.

When it is wished to clean the brush part 14, 19, more generally the brush element 13, the tool 10, 10.1 - 10.3 can be cleaned using the cleaning tool 20, 20.1, 20.2 in the upper edge 23 of the receptacle 22, in connection with collection. The cleaning of the tool 10, 10.1 - 10.3 then takes place when putting the oily substance O into the receptacle 22. This makes the cleaning work efficient, as both operations are taken care of at the same time. The brush part 14, 19, more generally the brush element 13 is then cleaned of oil by being combed against the scraper 24, 24.1, 24.2 arranged in the upper edge 23 of the receptacle 22. The brush part 14, 19 then travels through the scraper 24, 24.1, 24.2 and the oily substance O detaches from the brush part 14, 19 and from between its bristles 40.1, 40.2 and particularly the bristle bunches 41.1, 41.2 formed by them and from the top of the brush parts 14, 19 and even more generally the brush element 13, dripping and flowing into the receptacle 22 and the bag 26' placed in it. When the brush part 14, 19 has been combed for as long as deemed necessary, collection of the oily substance O can be continued with the tool 10, 10.1 - 10.3. Thus the tool 10, 10.1 - 10.3 is cleaned by scraping, i.e. combing it with a straight pulling or pushing movement, i.e. a linear movement against the scraper 24, 24.1 - 24.3 of the cleaning tool 20, 20.1 - 20.3. The linear movement is a rapid and effective way to clean the tool, compared, for example, to the rotational movement known from the prior art. Thanks to the invention, the tool 10, 10.1 - 10.3 need not be placed in a special place intended for it in the cleaning tool to clean it, in which the placing and cleaning of the tool in the cleaning tool and the removal of it from the cleaning tool takes time away from the actual cleaning work.

When there is no longer space in the bag 26' placed in the receptacle 22 for the oily substance O, the bag can be replaced with a new one. If the cleaning tool 20, 20.1, 20.2 is detachably in the receptacle 22, it is first of all detached before the bag 26' can be replaced with a bag 26 taken from a roll 27. When detaching the cleaning tool 20, 20.1, 20.2, the release element 37 is taken in a thumb-forefinger grip and turned outwards, i.e. upwards from the pail 28. The tongue 36 of the quick-release element 21 of the cleaning tool 20, 20.1, 20.2 under the annular reinforcement ring of the upper edge 23 of the receptacle 22 is then released from under the upper edge 23 of the receptacle 22. This is then repeated with the other quick-release elements 21.

After the release of the tongues 36, the cleaning tool 20, 20.1, 20.2 can be lifted out from contact with the upper edge 23 of the receptacle 22, the full bag 26' removed, and a new bag 26 set in place inside 25 the receptacle 22. After this, the groove 36 in the body 35 of the cleaning tool 20, 20.1, 20.2 is placed on top of the upper edge 23 of the receptacle 22 and all the quick-release elements 21 are pressed back onto the upper edge 23 of the receptacle 22. The tongues 36 then click under the annular edge reinforcement of the upper edge 23 of the receptacle 22 and the cleaning tool 20, 20.1, 20.2 remains firmly in place. After this, collection can again continue. The bag 26 facilitates and substantially accelerates the collection work. Thanks to the bag 26, the oily substance need no longer be scraped out of the pail 28, as would happen without the bag 26. The mouth of the filled bag is knotted and it is placed in, for example, a larger sack that has been delivered to the site, and which is eventually taken for disposal. If the scraper functionality is integrated permanently in the receptacle, the new bag is arranged in the receptacle in such a way that it fits under the scraper.

Once most of the oily substance O has been collected from the shore and ground, final cleaning is performed on the ground. In the previous stage, most of the oily substance O has already been removed from the objects S by scraping, but their surfaces must, however, still be cleaned of the substance that possibly remains. This can be done using the tool 10, 10.1 - 10.3, the composition 47, and the absorption cloths 48.

The composition 47 is poured onto the surfaces to be cleaned, which can also be scrubbed clean with the tool 10, 10.1 - 10.3 and which surfaces are then finally wiped clean using the absorption cloths 48. Instead of, or in addition to pouring, the composition 47 can be taken to the object S to be cleaned using the tool 10, 10.1 - 10.3, the brush part 14, 19 of which has been wetted with the composition 47. The same tool 10, 10.1 - 10.3 can also be used to brush the object S backwards and forwards to dissolve the remaining oily substance O and soften it off the object S. When brushing the surface of the object S is pressed with the brush part 19, so that the oily substance O detaches more easily from it at the same time as it softens. After cleaning, for example, cramped places, which still need cleaning, can be cleaned using the second brush part 19 of the tool 10, 10.1 - 10.3 soaked in the composition 47 and finally the objects S are wiped clean using an absorption cloth 48.

The composition 47 can be, for example, an organically-based foodstuff oil, of which one example is rapeseed oil. This is intended to dissolve and soften the oily substance O being collected and cleaned, so that at the end of cleaning it can be absorbed in an absorption cloth 48. It is spread by pouring and/or using the tool 10, 10.1 - 10.3 on the surface of the object S being cleaned, such as, for example, the surface of stones and rocks, to clean them of the oily substance O, which is then brushed using, for example, the second brush part 19 of the tool 10, 10.1 - 10.3. Rapeseed oil is particularly advantageous as the composition 47 in that it can be used to soften the otherwise very stiff oily substance O being collected. The rapeseed oil and the oily substance being removed with it are wiped using absorption cloths 48. The absorption cloths 48 are collected from the ground after cleaning and sent for disposal. One example of the absorption cloths 48 are those marketed by Knorring Oy Ab under the tradename "Oil Only". It can be important that the absorption cloths absorb only oil, not water.

When there is a break in the collection work, the tool 10, 10.1 - 10.3 can be left to await its continuation, without being spoiled. For this purpose, there is a hook in the end of the tool 10, 10.1 - 10.3, by which it can be left, for example, overnight to soak in a pail 28 of rapeseed oil. In this way, the tool 10, 10.1 - 10.3 remains in better condition and its brush parts 14, 19 will not, for example, harden during the break. When the tool 10, 10.1 - 10.3 has finally lost its collection ability, it can after use be burned, for example, without adverse effects.

The tool 10, 10.1 - 10.3 to be used at any particular time can be selected, for example, on the basis of the main grade of the oily substance O to be collected. For different grades there can be different tools and particularly their brush parts 14, 19. Typically, for example, diesel and light fuel oils do not require laborious cleaning, because they mostly evaporate. Crude and heavy fuel oils must without exception be cleaned and are therefore oil grades demanding much work, even though they too partly evaporate into the air after an oil accident at sea. However, the heaviest fractions of these, being the stiffest, travel to shores and are thrown onto stones and rocks on shore by the waves. The tool 10, 10.1 - 10.3 and especially the brush parts 14, 19 of those, the density of the bristle fibres 40.1 40.2 can be selected according to the viscosity of the oily substance O to be collected. The selection criteria of the bristles are, for example, the bristle fibres' material, the bristle fibres' length, the bristle fibres' diameter, the bristle fibres' shape (cross-section, straight/corrugated), and the density of bristles.

The width of the gaps D remaining between the lines L1 - L3 formed by the bristle bunches 41.1, 41.2, i.e. the distance of the adjacent bristle-bunch lines L1 - L3 from each other, can be, for example, 5 - 50 mm, more particularly 10 - 40 mm, and even more particularly 10 - 30 mm, for example, 15 - 25 mm. The oil's fluidity has an effect on suitable dimensioning. The fluidity i.e. viscosity is affected by, for example, temperature conditions. The distance between the bristle bunches 41.1, 41.2 in the lines L1 - L3 can be, for its part, for example, 5 - 15 mm, such as, for example, 10 mm. The scraper elements 33, 33.1 of a comb-like scraper 24, 24.1, 24.2 and their gaps 34, 34.1 can be dimensioned according to this. The fibre thickness of the bristles 40.1, 40.2 can be, for its part, for example, 0.5 - 2 mm. The height H1 - H3 of the bristles 40.1, 40.2 can be, for example, 20 - 60 mm. In one brush element 13, the bristle heights H1, H2, H3 of the lines L1, L2, and L3 can then be, for example, 50 mm, 40 mm, and 30 mm. The diameter of the hole arranged in the body 11 of the brush element 13 for the bristle bunches 41.1, 41.2 can be, for example, 4 - 10 mm, such as, for example 6 mm. The bristles 40.1, 40.2 can be straight or also corrugated. Particularly a straight bristle is especially suitable for the combing of a brush element 13 to be performed by a scraper 24, 24.1 - 24.3. These dimensions suit, for example, heavy fuel oil. The temperature range can be, for example, -10 - +40°C. In tools intended for higher temperature, the bristle bunches 41.1, 41.2 can be more densely in the brush element 13, because the fluidity of the substance to be collected is greater. In addition to polypropylene and PET, the bristles 40.1, 40.2 can be of, for example, nylon (PA) or polybutylene terephthalate (PBT).

Thus, the selection of the brush parts and bristle fibres is affected by the grade, i.e. the viscosity of the oil to be collected (heavy fuel oil or crude oil) and also by the atmospheric conditions, such as temperature. With a more fluid oil, a denser brush part and a thinner bristle fibre are used, and, correspondingly with a stiffer oil a thicker bristle fibre and a less dense brush part.

On the other hand, the tool 10, 10.1 - 10.3 can also be selected according to the current work stage. According to one embodiment, the system can include at least two tools. The first of these tools is suited by its brush element 13 and even more particularly by its bristles 40.1, 40.2 to scraping an oily substance O from an object S and transferring it to a receptacle 22. The brush parts 14, 19 of the first tool are particularly suited in the thickness and density of the bristles 40.1, 40.2 to a thick and stiff oily substance O. The second tool is, in turn, suited in its brush element, and more particularly its bristles 40.1, 40.2 to spreading an assisting composition 47 on an object S in the cleaning work and cleaning it by scrubbing.

In addition, the system can further also include a third tool suited in its brush element to collecting a viscous oily substance O from grooves and holes. In it, for example, steel wire can be used as the bristle fibres. In can be used to perform more aggressive scraping, for example, in objects difficult to access, for example when cleaning viscous soil mixed with oil from holes in stones. The first tool can be, for example, the tool 10.1 - 10.3 comprising a single brush part, shown in Figures 3 - 8, or else the tool 10 comprising two brush parts 14, 19, shown in Figures 16 and 17. The second and third tool can, instead of that, be without a first brush part.

Several different advantages are gained with the aid of the invention. First of all, the tool 10, 10.1 - 10.3 is more professional than the means known from the prior art and used for a similar purpose. The tool 10, 10.1 - 10.3 is more durable than, for example, the dish brush known from the prior art. The consumption of tools is therefore less, i.e. the saving in cost is considerable. In addition, the tool 10, 10.1 - 10.3 is also more efficient in collection and cleaning than a dish brush. Work with the tool 10, 10.1 - 10.3 is faster and more effective, i.e. the saving in cost is considerable. The collection of oil is easier and faster, thanks to the system (receptacle 22 / bag 26 / cleaning tool 20, 20.1 - 20.3) and method. Thanks to the tool's improved collection capacity, it needs cleaning less frequently, which helps to accelerate cleaning. Collection and handling are in all ways faster and cleaner. These are all important for the meaningfulness of cleaning operations, which often take place using volunteers.

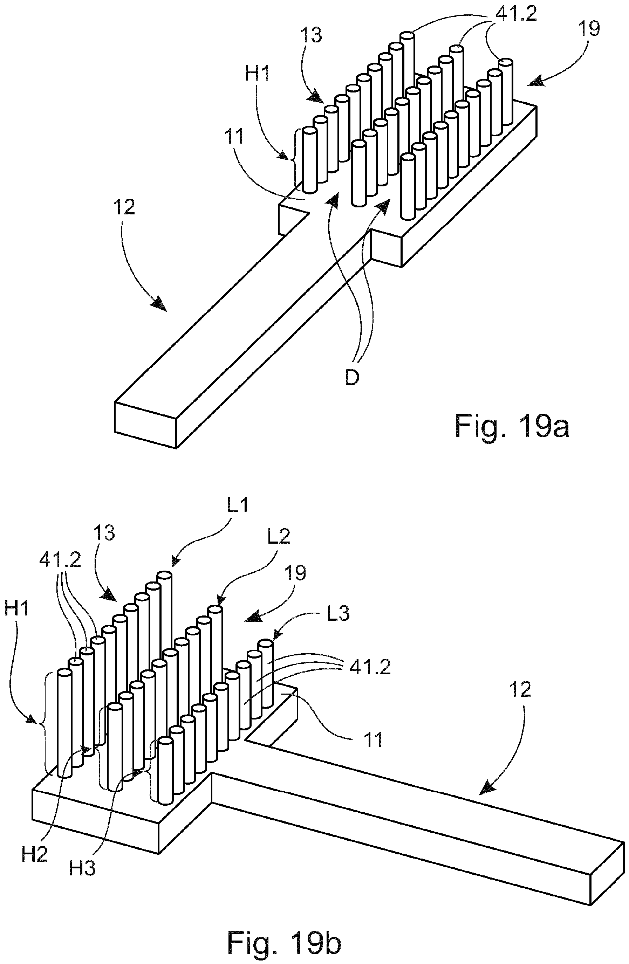

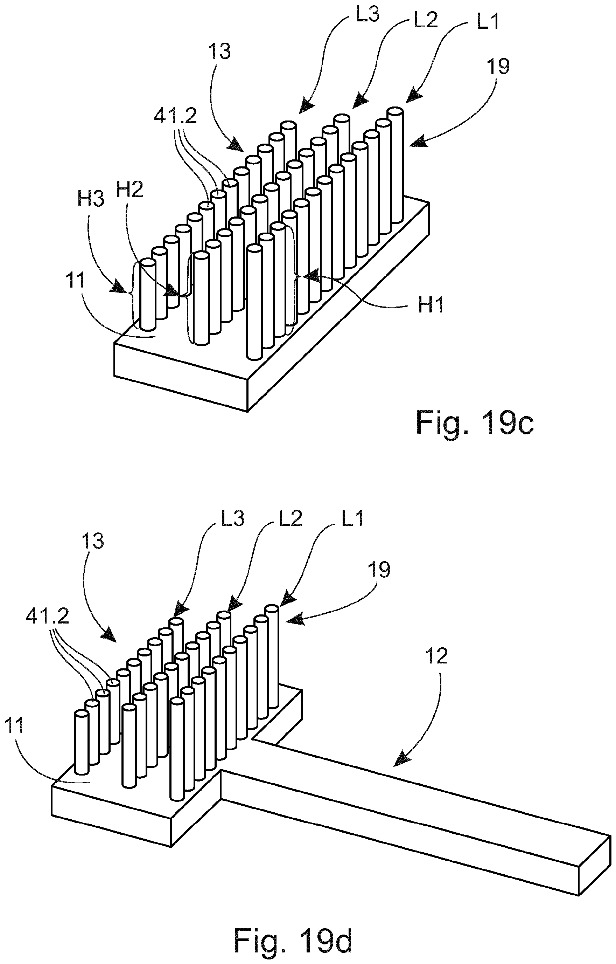

Figures 19a - 20d further show simplified embodiments of the tool and scraper 24.3, in which the reference numbers are used to refer to parts corresponding to those in earlier figures.

Figures 20a, 20b, and 20d particularly show the principle of cleaning the brush element 13 when using a manual scraper.

According to one embodiment, the method can be implemented using the following equipment and work stages:
Work equipment:
   - Absorption cloths 48,
   - Rapeseed oil 47,
   - Hand brush 10, 10.1 - 10.3,
      * 3-line bristles, considerable collecting effect in the gaps D between lines L1 - L3,
      * Two different models, even bristles, in which the bristles of lines L1 - L3 are the same length, not forming part of the invention, and stepped bristles, in which the length of the bristles differs between lines L1 - L3.
   - Pail 28 and plastic bag 26,
   - Scraper,
      * Scraper model, which cleans the gaps D between the bristle-bunch lines L1 - L3 in the direction of the bristle-bunch lines L1 - L3,
      * Large "finger-like" spikes 33.2, 33.3, which collect oil accumulations effectively from the brush element 13 with a single pass parallel to lines L1 - L3.
Work stages:
   * The example used is a shore boulder field, a large and difficult to move stone S, which is covered in crude oil O.
1^{st}. stage. Preparatory washing
   Work equipment: Absorption cloth 48.
   - The easily detached oil layer O is wiped from the surface of the stone S using absorption cloths 48,
   - The absorption cloth 48 is wiped along the surface of the stone S, the cloth 48 has absorptive properties.
2^{nd.} stage. Detaching and collection
   Work equipment: Hand brush 10, 10.1 - 10.3 + cleaning tool 20, 20.1 - 20.3.
      - Using a special brush designed for this work stage, the oil accumulations O that are tightly attached to the stone S are detached and collected,
      - The lines L1 - L3 formed of bristle bunches 41.1, 41.2 formed of stiff bristles 40.1, 40.2 effectively collect the oil accumulations O into the gaps D between the bristle-bunch lines,
      - The bristles 40.1, 40.2 conform to the irregular shapes of the stone S and remove and collect the difficult to detach oil accumulations O from the surface of the stone S more efficiently than an absorption cloth 48.
      - The brush element 13 of the tool 10, 10.1 - 10.3 is moved on the surface of the stone S against the bristle lines L1 - L3, in such a way that the bristle lines L1 - L3 act as if they were separate trowels, which detach and collect oil accumulations O into themselves and their gaps D.
   * A backwards and forwards movement can be made with the brush element 13 of the tool 10, 10.1 - 10.3, when the whole collection capacity of the tool 10, 10.1 - 10.3 is exploited. Both sides of each bristle line L1 - L3 detach and collect oil O, which accumulates in the gaps D between the bristle lines L1 - L3.
      - After this, the brush element 13 of the tool 10, 10.1 - 10.3 is combed with the aid of a cleaning tool 20, 20.1 - 20.3 equipped with a scraper 24, 24.1 - 24.3, so that the oil accumulations O collected in the gaps D between the bristle-bunch lines detach onto the scraper 24, 24.1 - 24.3, from which they are transferred to an oil-collection pail 28.
      - The detaching and collection work stage is repeated until the desired result is achieved.
   * Repeat up to 10 x minute (brushing + combing).
3^{rd.} stage. Washing
   Work equipment: absorption cloth 48 + rapeseed oil 47.
      - Rapeseed oil 47 is poured onto the surface of the stone S to assist the finishing cleaning.
      - The stone S is wiped clean.
   It should be understood that the above description and the related figures are intended only to illustrate the device and method according to the present invention. The invention is thus not restricted to the embodiments described above or defined in the Claims, but instead many different variations and adaptations of the invention, which are possible within the scope of the inventive idea defined in the accompanying Claims, will be obvious to one skilled in the art.

## Claims

1. A system for manually cleaning an environment of a substance with an oil content, which includes
- one or several hand tools (10, 10.1 - 10.3), which include
- a handle part (49),
- a brush element (13), attached to the handle part (49), to which bristles (40.1, 40.2) are fitted,
- one or several cleaning tools (20, 20.1 - 20.3), which include one or several scrapers (24, 24.1 - 24.3) equipped with scraper elements (33, 33.1 - 33.3), for cleaning the hand tool's (10, 10.1 - 10.3) brush element (13) of the substance (O) with an oil content,
and in at least one hand tool (10, 10.1 - 10.3) belonging to the system,
- at least some of bristles (40.1, 40.2) are arranged to form bristle bunches (41.1, 41.2) arranged in the brush element (13) in two or more lines (L1 - L3),
- in the brush element (13) at least some of the lines of the bristle bunches (41.1, 41.2) are at a distance (D) from each other,
and in which system the scraper elements (33.1 - 33.3) of the scraper (24.2, 24.3) of at least one cleaning tool (20.1 - 20.3) and the lines of bristle bunches (41.1, 41.2) of the brush element (13) of the hand tool (10, 10.1 - 10.3) belonging to the system are arranged relative to each other for scraping the substance (O) with an oil content from between the lines of bristle bunches (41.1, 41.2) by means of the scraper elements (33.1 - 33.3), **characterized in that** the length (H1 - H3) of the bristle bunches (41.1, 41.2) of the brush element (13) of the hand tool (10, 10.1 - 10.3) is arranged to differ between the lines (L1 - L3).

2. The system according to Claim 1, **characterized in that** the system includes as hand tools
- a first hand tool (10, 10.1 - 10.3) arranged in its brush element (13) for scraping a substance (O) with an oil content from an object (S) and transferring it to a receptacle (22),
- a second hand tool arranged in its brush element to spread a composition (47) on the object (S) and to clean it by scrubbing.

3. The system according to Claim 1 or 2, **characterized in that** the lines (L1 - L3) formed of bristle bunches (41.1, 41.2) to the brush element (13) are arranged to rise in terms of the length (H1 - H3) of the bristle bunches (41.1, 41.2).

4. The system according to any of Claims 1 - 3, **characterized in that**
- the brush element (13) includes a body (11) formed of a flat piece (45), which includes one or more flat surfaces (42, 43, 52, 53),
- the bristle bunches (41.1, 41.2) are fitted to the body (11) on one or more flat surface (53, 43).

5. The system according to any of Claims 1 - 4, **characterized in that**
- the body (11) of the brush element (13) is formed of a flat piece (45),
- the bristle bunches (41.1, 41.2) are fitted to one flat surface (43) of the flat piece (45) and the second flat surface (42) on the opposite side of the flat piece (45) is free of bristles.

6. The system according to any of Claims 1 - 5, **characterized in that** the bristles (40.1) belonging to a bristle bunch (41.1) are bent and the bend in the bristles (40.1) is 45 - 110 degrees in magnitude.

7. The system according to Claim 6, **characterized in that** the bristles (40.1, 40.2) include a bristle part (18.1) joined to the flat surface (42, 53) of the flat piece (45) and a bent bristle part (18.2) following it and between which bristle parts (18.1, 18.2) there is a bend (46).

8. The system according to any of Claims 1 - 7, **characterized in that**
- a hand grip (12) is fitted to the handle part (49) for holding the hand tool (10, 10.1, 10.3) in the hand (16),
- the hand grip (12) includes end flanges (32) and a grip area (44) fitted between them,
- the brush element (13) is arranged to be attached to the hand grip (12) in such a way that they are on different planes.

9. The system according the Claim 8, **characterized in that**
- the body (11) of the brush element (13) is formed from a flat piece (45),
- bristle bunches (41.1) are fitted to the flat surface (53) of the flat piece (45) at the end (15) of the hand tool (10, 10.3), being the opposite end to the handle part (49).

10. The system according to any of Claims 1 - 9, **characterized in that** the handle part (49) includes an adapted component (49') for an extension arm for using the hand tool (10.2) with two hands.

11. The system according to Claim 1, **characterized in that** the cleaning tool (20, 20.1, 20.2)
- is detachably attached to the receptacle (22), in which the substance (O) with an oil content is arranged to be collected,
- includes quick-release elements (21) for securing the cleaning tool (20, 20.1, 20.2) detachably to the upper edge (23) of the receptacle (22).

12. The system according to Claim 11, **characterized in that** the cleaning tool (20.1, 20.2) includes two scrapers (24.1 - 24.3), for cleaning the brush element (13) belonging to the hand tool (10, 10.1 - 10.3), fitted in the area of the receptacle (22) when the cleaning tool (20.1, 20.2) is attached to the receptacle (22).

13. The system according to Claim 12, **characterized in that** the cleaning tool (20, 20.1, 20.2) includes in addition a comb-like scraper (24.1, 24.2) equipped with sharp scraper elements (33, 33.1) for scraping a substance (O) with an oil content from the brush element (13).

14. The system according to Claim 1, **characterized in that** the cleaning tool (20.3) includes a hand grip (50) for holding the cleaning tool (20.3) in a hand.

15. A method for manually cleaning an environment of a substance with an oil content, in which
- the substance (O) with an oil content is collected by means of a hand tool (10, 10.1, 10.2) equipped with a brush element (13),
- the hand tool (10, 10.1 - 10.3) is cleaned of the substance (O) with an oil content by using cleaning tool (20, 20.1 - 20.3) to transfer the substance (O) with an oil content to a receptacle (22), **characterized in that**
- the collectors of the substance (O) with an oil content are equipped with
- a hand tool (10, 10.1 - 10.3) of a system according to any of Claims 1 - 10 for collecting the substance (O) with an oil content,
- a cleaning tool (20, 20.1 - 20.3) of a system according to any of Claims 11 - 14 for cleaning the hand tool (10, 10.1 - 10.3) of the substance (O) with an oil content,
- the receptacles (22) are equipped with changeable bags (26),
- the hand tools (10, 10.1 - 10.3) is cleaned of the substance (O) with an oil content using the cleaning tool (20, 20.1 - 20.3).

## Patentansprüche

1. System zur manuellen Reinigung einer Umgebung von einer Substanz mit einem Ölgehalt, bestehend aus
- einem oder mehreren Handwerkzeugen (10, 10.1 - 10.3), bestehend aus
- einem Griffteil (49),
- einem Bürstenelement (13), das am Griffteil (49) befestigt ist und das mit Borsten (40.1, 40.2) ausgestattet ist,
- einem oder mehreren Reinigungswerkzeugen (20, 20.1
- 20.3), bestehend aus einem oder mehreren Schabern (24, 24.1 - 24.3), die zum Reinigen des Bürstenelements (13) der Handwerkzeuge (10, 10.1 - 10.3) von einer Substanz (O) mit einem Ölgehalt mit Schabeelementen (33, 33.1 - 33.3) ausgestattet sind,
und in mindestens einem zum System gehörenden Handwerkzeug (10, 10.1 - 10.3)
- sind mindestens einige der Borsten (40.1, 40.2) so angeordnet, dass sie Borstenbündel (41.1, 41.2) bilden, die in zwei oder mehr Reihen (L1 - L3) am Bürstenelement (13) angeordnet sind,
- im Bürstenelement (13) liegen mindestens einige der Reihen der Borstenbündel (41.1, 41.2) in einem Abstand (D) zueinander,
und in dem System sind die Schabeelemente (33.1 - 33.3) des Schabers (24.2, 24.3) von mindestens einem Reinigungswerkzeug (20.1 - 20.3) und die Reihen der Borstenbündel (41.1, 41.2) des Bürstenelements (13) des zum System gehörenden Handwerkzeugs (10, 10.1 - 10.3) versetzt zueinander angeordnet, um die Substanz (O) mit einem Ölgehalt zwischen den Reihen der Borstenbündel (41.1, 41.2) mithilfe der Schabeelemente (33.1 - 33.3) heraus zu schaben, **dadurch gekennzeichnet, dass** die Länge (H1 - H3) der Borstenbündel (41.1, 41.2) des Bürstenelements (13) des Handwerkszeugs (10, 10.1 - 10.3) zwischen den Reihen (L1 - L3) unterschiedlich ausgelegt ist.

2. System nach Anspruch 1, **dadurch gekennzeichnet, dass** das System als Handwerkzeuge umfasst
- ein erstes Handwerkzeug (10, 10.1 - 10.3), das an dem Bürstenelement (13) zum Abschaben einer Substanz (O) mit einem Ölgehalt von einem Objekt (S) und zum Weiterleiten der Substanz zu einem Behälter (22) angeordnet ist,
- ein zweites Handwerkzeug, das in dem Bürstenelement angeordnet ist, um ein Gemisch (47) auf das Objekt (S) zu sprühen und es sauber zu bürsten.

3. System nach Anspruch 1 oder 2, **dadurch gekennzeichnet, dass** die aus Borstenbündeln (41.1, 41.2) am Bürstenelement (13) gebildeten Reihen (L1 - L3) so angeordnet sind, dass sie von der Länge (H1 - H3) der Borstenbündel (41.1, 41.2) her höher werden.

4. System nach jedem der Ansprüche 1 - 3, **dadurch gekennzeichnet, dass**
- das Bürstenelement (13) einen Körper (11) hat, der aus einem ebenen Stück (45) geformt ist, das eine oder mehrere ebene Oberflächen (42, 43, 52, 53) umfasst,
- die Borstenbündel (41.1, 41.2) am Körper (11) an einer oder mehreren ebenen Oberflächen (53, 43) angebracht sind.

5. System nach jedem der Ansprüche 1 - 4, **dadurch gekennzeichnet, dass**
- der Körper (11) des Bürstenelements (13) aus einem ebenen Stück (45) geformt ist,
- die Borstenbündel (41.1, 41.2) an einer ebenen Oberfläche (43) des ebenen Stücks (45) angebracht sind und die zweite ebene Oberfläche (42) auf der gegenüberliegenden Seite des ebenen Stücks (45) keine Borsten hat.

6. System nach jedem der Ansprüche 1 - 5, **dadurch gekennzeichnet, dass** die zum Borstenbündel (41.1) gehörenden Borsten (40.1) gebogen sind und der Biegungswinkel der Borsten (40.1) 45 - 110° beträgt.

7. System nach Anspruch 6, **dadurch gekennzeichnet, dass** die Borsten (40.1, 40.2) einen Borstenteil (18.1) enthalten, der mit der ebenen Oberfläche (42, 53) des ebenen Stücks (45) verbunden ist, und einen dahinter liegenden gebogenen Borstenteil (18.2), und dass zwischen den Borstenteilen (18.1, 18.2) eine Biegung (46) ist.

8. System nach jedem der Ansprüche 1 - 7, **dadurch gekennzeichnet, dass**
- ein Handgriff (12) am Griffteil (49) angebracht ist, um das Handwerkzeug (10, 10.1, 10.3) in der Hand (16) zu halten,
- der Handgriff (12) Endflansche (32) und zwischen diesen einen Griffbereich (44) umfasst,
- das Bürstenelement (13) so am Handgriff (12) befestigt ist, dass beide in verschiedenen Ebenen liegen.

9. System nach Anspruch 8, **dadurch gekennzeichnet, dass**
- der Körper (11) des Bürstenelements (13) aus einem ebenen Stück (45) gebildet ist,
- die Borstenbündel (41.1) sind an der ebenen Oberfläche (53) des ebenen Stücks (45) an dem Ende (15) des Handwerkzeugs (10, 10.3) angebracht, das dem Handwerkzeug (49) gegenüber liegt.

10. System nach jedem der Ansprüche 1 - 9, **dadurch gekennzeichnet, dass** der Griffteil (49) eine adaptierte Komponente (49') für einen Verlängerungsarm enthält, wenn das Handwerkzeug (10.2) mit beiden Händen betätigt wird.

11. System nach Anspruch 1, **dadurch gekennzeichnet, dass** das Reinigungswerkzeug (20, 20.1, 20.2)
- abnehmbar am Behälter (22) befestigt ist, in dem die Substanz (O) mit einem Ölgehalt gesammelt werden soll,
- Schnellspannelemente (21) zur Fixierung des Reinigungswerkzeugs (20, 20.1, 20.2) enthält, die lösbar an der oberen Kante (23) des Behälters (22) angebracht sind.

12. System nach Anspruch 11, **dadurch gekennzeichnet, dass** das Reinigungswerkzeug (20.1, 20.2) zwei Schaber (24.1 - 24.3) zum Reinigen des zum Handwerkzeug (10, 10.1 - 10.3) gehörenden Bürstenelements (13) enthält, angebracht im Bereich des Behälters (22), wenn das Reinigungswerkzeug (20.1, 20.2) am Behälter (22) befestigt ist.

13. System nach Anspruch 12, **dadurch gekennzeichnet, dass** das Reinigungswerkzeug (20, 20.1, 20.2) auch einen kammförmigen Schaber (24.1, 24.2) mit scharfkantigen Schabeelementen (33, 33.1) zum Abschaben einer Substanz (O) mit einem Ölgehalt vom Bürstenelement (13) umfasst.

14. System nach Anspruch 1, **dadurch gekennzeichnet, dass** das Reinigungswerkzeug (20.3) einen Handgriff (50) enthält, um das Reinigungswerkzeug (20.3) in der Hand zu halten.

15. Verfahren zur manuellen Reinigung einer Umgebung von einer Substanz mit einem Ölgehalt, bei dem
- die Substanz (O) mit einem Ölgehalt mithilfe eines Handwerkzeugs (10, 10.1, 10.2), das mit einem Bürstenelement (13) ausgestattet ist, gesammelt wird,
- das Handwerkzeug (10, 10.1 - 10.3) von der Substanz (O) mit Ölgehalt unter Verwendung eines Reinigungswerkzeugs (20, 20.1 - 20.3) gesäubert wird, um die Substanz (O) mit Ölgehalt zu einem Behälter (22) zu leiten,
**dadurch gekennzeichnet, dass**
- die Sammelvorrichtungen für die Substanz (O) mit Ölgehalt ausgestattet sind mit
- einem Handwerkzeug (10, 10.1 - 10.3) eines Systems nach jedem der Ansprüche 1 - 10 zum Sammeln der Substanz (O) mit Ölgehalt,
- einem Reinigungswerkzeug (20, 20.1 - 20.3) eines Systems nach einem der Ansprüche 11 - 14 zum Reinigen des Handwerkzeugs (10, 10.1
- 10.3) von der Substanz (O) mit einem Ölgehalt,
- die Behälter (22) mit auswechselbaren Beuteln (26) ausgestattet sind,
- die Handwerkzeuge (10, 10.1 - 10.3) von der Substanz (O) mit Ölgehalt unter Verwendung eines Reinigungswerkzeugs (20, 20.1 - 20.3) gesäubert werden.

## Revendications

1. Système pour nettoyer manuellement un environnement d'une substance ayant une teneur en huile, comprenant
- un ou plusieurs outils à main (10, 10.1 à 10.3), comprenant
- un manche (49),
- une brosse (13), fixée au manche (49), à laquelle des poils (40.1, 40.2) sont fixés,
- un ou plusieurs outils de nettoyage (20, 20.1 à 20.3), comprenant un ou plusieurs racloirs (24, 24.1 à 24.3) équipés d'éléments de raclage (33, 33.1 à 33.3), pour nettoyer la brosse (13) de l'outil à main (10, 10.1 à 10.3) de la substance (O) ayant une teneur en huile,
et dans au moins un outil à main (10, 10.1 à 10.3) faisant partie du système,
- au moins quelques poils (40.1, 40.2) sont disposés de façon à former des groupes de poils (41.1, 41.2) disposés dans la brosse (13) sur deux rangées ou plus (L1 à L3),
- dans la brosse (13) au moins quelques rangées des groupes de poils (41.1, 41.2) sont situées à une certaine distance (D) les unes des autres,
et, dans ledit système, les éléments de raclage (33.1 à 33.3) du racloir (24.2, 24.3) d'au moins un outil de nettoyage (20.1 à 20.3) et les rangées de groupes de poils (41.1, 41.2) de la brosse (13) de l'outil à main (10, 10.1 à 10.3) faisant partie du système sont disposés les uns par rapport aux autres pour racler la substance (O) ayant une teneur en huile entre les rangées de groupes de poils (41.1, 41.2) au moyen des éléments de raclage (33.1 à 33.3), **caractérisé en ce que** la longueur (H1 à H3) des groupes de poils (41.1, 41.2) de la brosse (13) de l'outil à main (10, 10.1 à 10.3) est différente selon les rangées (L1 à L3).

2. Système conformément à la revendication 1, **caractérisé en ce que** le système comprend en tant qu'outils à main
- un premier outil à main (10, 10.1 à 10.3) disposé dans sa brosse (13) pour racler une substance (O) ayant une teneur en huile d'un objet (S) et la transférer dans un réceptacle (22),
- un deuxième outil à main disposé dans sa brosse pour répandre une composition (47) sur l'objet (S) et pour le nettoyer en frottant.

3. Système conformément à la revendication 1 ou 2, **caractérisé en ce que** les rangées (L1 à L3) formées de groupes de poils (41.1, 41.2) sur la brosse (13) sont disposées de façon à ce que la longueur (H1 à H3) des groupes de poils (41.1, 41.2) augmente.

4. Système conformément à l'une quelconque des revendications 1 à 3, **caractérisé en ce que**
- la brosse (13) comprend un corps (11) formé d'une pièce plate (45), qui comprend une ou plusieurs surfaces planes (42, 43, 52, 53),
- les groupes de poils (41.1, 41.2) sont fixés au corps (11) sur une ou plusieurs surfaces planes (53, 43) .

5. Système conformément à l'une quelconque des revendications 1 à 4, **caractérisé en ce que**
- le corps (11) de la brosse (13) est formé d'une pièce plate (45),
- les groupes de poils (41.1, 41.2) sont fixés à une surface plane (43) de la pièce plate (45) et la deuxième surface plane (42) de l'autre côté de la pièce plate (45) ne présente pas de poils.

6. Système conformément à l'une quelconque des revendications 1 à 5, **caractérisé en ce que** les poils (40.1) faisant partie d'un groupe de poils (41.1) sont recourbés et l'angle de la courbure des poils (40.1) est de 45 à 110 degrés.

7. Système conformément à la revendication 6, **caractérisé en ce que** les poils (40.1, 40.2) sont composés d'une partie de poils (18.1) fixée à la surface plane (42, 53) de la pièce plate (45) et d'une partie de poils (18.2) redressés à la suite, et entre ces parties de poils (18.1, 18.2) se trouve une courbure (46).

8. Système conformément à l'une quelconque des revendications 1 à 7, **caractérisé en ce que**
- une poignée (12) est fixée au manche (49) pour tenir l'outil à main (10, 10.1, 10.3) dans la main (16),
- la poignée (12) comprend des plaques d'extrémité (32) et une zone de préhension (44) entre les deux,
- la brosse (13) est conçue pour être fixée à la poignée (12) de façon à ce qu'elles ne soient pas sur le même plan.

9. Système conformément à la revendication 8, **caractérisé en ce que**
- le corps (11) de la brosse (13) est composé d'une pièce plate (45),
- les groupes de poils (41.1) sont fixés à la surface plane (53) de la pièce plate (45) à l'extrémité (15) de l'outil à main (10, 10.3) opposée au manche (49).

10. Système conformément à l'une quelconque des revendications 1 à 9, **caractérisé en ce que** le manche (49) comprend un composant adapté (49') pour une rallonge permettant d'utiliser l'outil à main (10.2) à deux mains.

11. Système conformément à la revendication 1, **caractérisé en ce que** l'outil de nettoyage (20, 20.1, 20.2)
- est fixé de manière amovible au réceptacle (22) dans lequel la substance (O) ayant une teneur en huile sera recueillie,
- comprend des éléments à attache rapide (21) pour fixer l'outil de nettoyage (20, 20.1, 20.2) de manière amovible au bord supérieur (23) du réceptacle (22).

12. Système conformément à la revendication 11, **caractérisé en ce que** l'outil de nettoyage (20.1, 20.2) comprend deux racloirs (24.1 à 24.3), pour nettoyer la brosse (13) faisant partie de l'outil à main (10, 10.1 à 10.3), fixés dans la zone du réceptacle (22) lorsque l'outil de nettoyage (20.1, 20.2) est fixé au réceptacle (22).

13. Système conformément à la revendication 12, **caractérisé en ce que** l'outil de nettoyage (20, 20.1, 20.2) comprend en plus un racloir ressemblant à un peigne (24.1, 24.2) équipé d'éléments de raclage pointus (33, 33.1) pour retirer de la brosse (13) une substance (O) ayant une teneur en huile en la raclant.

14. Système conformément à la revendication 1, **caractérisé en ce que** l'outil de nettoyage (20.3) comprend une poignée (50) pour tenir l'outil de nettoyage (20.3) dans une main.

15. Procédé pour nettoyer manuellement un environnement d'une substance ayant une teneur en huile, dans lequel
- la substance (O) ayant une teneur en huile est recueillie au moyen d'un outil à main (10, 10.1, 10.2) équipé d'une brosse (13),
- l'outil à main (10, 10.1 à 10.3) est nettoyé de la substance (O) ayant une teneur en huile à l'aide d'un outil de nettoyage (20, 20.1 à 20.3) qui transfère la substance (O) ayant une teneur en huile dans un réceptacle (22),
**caractérisé en ce que**
- les éléments permettant de recueillir la substance (O) ayant une teneur en huile comprennent
- un outil à main (10, 10.1 à 10.3) d'un système conformément à l'une quelconque des revendications 1 à 10 pour recueillir la substance (O) ayant une teneur en huile,
- un outil à main (20, 20.1 à 20.3) d'un système conformément à l'une quelconque des revendications 11 à 14 pour nettoyer l'outil à main (10, 10.1 à 10.3) de la substance (O) ayant une teneur en huile,
- les réceptacles (22) sont équipés de sacs pouvant être changés (26),
- les outils à main (10, 10.1 à 10.3) sont nettoyés de la substance (O) ayant une teneur en huile à l'aide de l'outil de nettoyage (20, 20.1 à 20.3).
